(19) Europäisches Patentamt
European Patent Office
Office européen des brevets

(11) **EP 3 678 300 A1**

(12) **EUROPEAN PATENT APPLICATION**
published in accordance with Art. 153(4) EPC

(43) Date of publication:
**08.07.2020  Bulletin 2020/28**

(51) Int Cl.:
*H04B 7/0426* (2017.01)    *H04B 7/0413* (2017.01)
*H04L 27/26* (2006.01)    *H04W 88/02* (2009.01)

(21) Application number: **18851636.3**

(22) Date of filing: **14.08.2018**

(86) International application number:
**PCT/JP2018/030252**

(87) International publication number:
**WO 2019/044486 (07.03.2019 Gazette 2019/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **28.08.2017   JP 2017163303**

(71) Applicant: **Sony Corporation
Tokyo 108-0075 (JP)**

(72) Inventors:
• **MA Yuelin
  Tokyo 108-0075 (JP)**
• **MORIOKA Yuichi
  Tokyo 108-0075 (JP)**

(74) Representative: **D Young & Co LLP
120 Holborn
London EC1N 2DY (GB)**

(54) **WIRELESS COMMUNICATION DEVICE AND METHOD, AND PROGRAM**

(57)     The present technique relates to a wireless communication device and method, and a program in which a communication success rate can be more easily improved.

The wireless communication includes a channel estimation section that performs channel estimation on the basis of designation information for designating a signal pattern of a predetermined section in each of a plurality of transmission signals and arrival signals which are received by a plurality of antennas and which include the plurality of transmission signals having been substantially simultaneously transmitted, and a signal processing section that performs interference removal on the arrival signals on the basis of a result of the channel estimation. The present technique is applicable to a wireless communication device.

FIG.2

**Description**

[Technical Field]

The present technique relates to a wireless communication device and method and a program, and particularly relates to a wireless communication device and method and a program in which a communication success rate can be more easily improved.

[Background Art]

For example, regarding wireless communication devices of a wireless LAN (Local Area Network) that complies with the standards of IEEE (The Institute of Electrical and Electronic Engineers) 802.11, a mechanism (listen before talk) in which the wireless communication devices obtain transmission opportunities in an autonomous distribution manner, is used.

However, in wireless communication using such a communication scheme, all the other wireless communication devices that are located within a reachable range of a signal being transmitted from a certain wireless communication device, refrain from transmitting their own signals, and thus, the entire frequency utilization efficiency of the system is deteriorated.

Therefore, a spatial reuse technique has been introduced in IEEE802.11ax, so that transmission/reception can be performed simultaneously among a plurality of BSSs (Basic Service Sets).

Specifically, spatial reuse based on OBSS-PD (Overlapping Basic Service Set-Packet Detection) has been introduced in IEEE802.11ax, for example.

In OBSS-PD, a network identifier (BSS Color) added to a physical header of a signal is used. Thus, even in a case where a detected signal has arrived with power equal to or greater than a signal detection threshold (CCA-SD (Clear Channel Assessment-Signal Detection)), an idle state of a medium (transmission medium) can be determined.

Specifically, even when the reception power of a received signal is equal to or greater than a signal detection threshold, it can be determined that the signal is not a signal of the same network but is an OBSS signal. Further, when the reception power of the signal is equal to or less than an OBSS-PD threshold, it can be determined that the medium is in an idle state.

When a medium is determined to be in an idle state, a wireless communication device gives up receiving an OBSS signal (Color Filtering) and is brought into a back-off state. When the back-off state is finished before completion of transmission/reception of an OBSS signal, a transmission opportunity for transmitting a signal (hereinafter, also referred to as an SR (Spatial Reuse) signal) through a special reuse operation is obtained. Accordingly, even in a state where an OBSS signal is being transmitted, a BSS signal (SR signal) can be transmitted.

In addition, in another wireless communication scheme, since a full duplex communication-compatible wireless communication device can simultaneously perform transmission and reception, such a wireless communication device can transmit a signal to a certain reception station while simultaneously receiving a signal from a transmission station that is different from the reception station. This is referred to as a so-called unidirectional full duplex communication herein. In the unidirectional full duplex communication, an FD (Full Duplex) communication station can receive a signal transmitted from a transmission station, and can simultaneously transmit a signal to a reception station.

In the unidirectional full duplex communication, for a reception station, a signal transmitted from an FD communication station is a target signal to be primarily received by the reception station. In contrast, a signal transmitted from a transmission station is a non-target signal that does not need to be received by the reception station. The non-target signal interferes with the target signal. Since an intensity in interference of such a signal varies in accordance with a positional relation among a transmission station, a reception station, and an FD communication station, a state of the interference is difficult to predict.

Therefore, a technique has been suggested in which an FD communication station collects positional information regarding each of wireless communication devices, and selects a transmission station and a reception station therefrom (see PTL 1, for example).

In this technique, when unidirectional full duplex communication is performed, two wireless communication devices located at positions far apart from each other are selected as a transmission station and a reception station. Also, PTL 1 suggests that a transmission station transmits a signal by beam forming, so that interference, at a reception station, between a signal from an FD communication station and a signal from the transmission station is reduced.

[Citation List]

[Patent Literature]

[PTL 1]
US Patent Application Publication No. 2016/0344532

[Summary]

[Technical Problems]

However, with the aforementioned technique, it has been difficult to easily perform communication with a high success rate.

For example, with a spatial reuse technique based on OBSS-PD, an SR signal is transmitted before completion of transmission/reception of an OBSS signal. Therefore, the SR signal is a non-target signal for a wireless communication device that receives an OBSS signal as a target signal.

Thus, in order to reduce the interference with an OBSS signal, the transmission side of an SR signal adjusts allowable transmission power of the SR signal in accordance with the reception power of the OBSS signal.

Specifically, for example, when the reception power of an OBSS signal is higher, it is determined that the source of the OBSS signal is disposed at a closer position, and the transmission power of an SR signal is lowered so as not to inhibit reception of the OBSS signal. In contrast, when the reception power of an OBSS signal is low, the source of the OBSS signal is disposed at a distant position. Thus, an SR signal can be transmitted without involving reduction in transmission power thereof.

However, such adjustment of transmission power of an SR signal deteriorates the reception SINR (Signal to Interference and Noise Ratio) at the reception side of the SR signal because the transmission power of the SR signal is lowered when the reception power of an OBSS signal is high. Accordingly, the communication success rate of the SR signal is deteriorated, so that transmission of an SR signal needs to be performed many times.

In addition, with the technique in which, when unidirectional full duplex communication is performed, an FD communication station collects positional information regarding wireless communication devices and selects a transmission station and a reception station therefrom, the communication success rate can be improved but the processing amount becomes large because collection of the positional information regarding wireless communication devices is required. Accordingly, not only the processing amount is increased by collection of the positional information and selection of a transmission station and a reception station in view of the positional information, but also a time to be taken until communication is started is lengthened.

The present technique has been achieved in view of the aforementioned circumstances, and can more easily improve a communication success rate.

[Solution to Problems]

A wireless communication device according to a first aspect of the present technique includes a channel estimation section that performs channel estimation on the basis of designation information for designating a signal pattern of a predetermined section in each of a plurality of transmission signals and arrival signals which are received by a plurality of antennas and which include the plurality of transmission signals having been substantially simultaneously transmitted, and a signal processing section that performs interference removal on the arrival signals on the basis of a result of the channel estimation.

A wireless communication method or program according to the first aspect of the present technique, includes performing channel estimation on the basis of designation information for designating a signal pattern of a predetermined section in each of a plurality of transmission signals and arrival signals which are received by a plurality of antennas and which include the plurality of transmission signals having been substantially simultaneously transmitted, and performing interference removal on the arrival signals on the basis of a result of the channel estimation.

According to the first aspect of the present technique, channel estimation is performed on the basis of designation information for designating a signal pattern of a predetermined section in each of a plurality of transmission signals and arrival signals which are received by a plurality of antennas and which include the plurality of transmission signals having been substantially simultaneously transmitted, and interference removal is performed on the arrival signals on the basis of a result of the channel estimation.

A wireless communication device according to a second aspect of the present technique includes a signal generation section that generates, on the basis of designation information which is included in a trigger frame and which designates a signal pattern of a predetermined section in a transmission signal, the transmission signal which includes the section having the signal pattern designated by the designation information, and a transmission section that transmits the transmission signal at a timing determined by the trigger frame.

A wireless communication method or program according to the second aspect of the present technique, includes generating, on the basis of designation information which is included in a trigger frame and which designates a signal pattern of a predetermined section in a transmission signal, the transmission signal which includes the section having the signal pattern designated by the designation information, and transmitting the transmission signal at a timing determined by the trigger frame.

According to the second aspect of the present technique, the transmission signal including the section having the signal pattern designated by the designation information is generated on the basis of the designation information which is included in the trigger frame and which designates the signal pattern of the predetermined section in the transmission signal, and the transmission signal is transmitted at a timing determined by the trigger frame.

[Advantage Effect of Invention]

According to the first and second aspects of the present technique, the communication success rate can be more easily improved.

Note that the effects described here are not necessarily limitative, and any one of the effects disclosed herein may be provided.

[Brief Description of Drawings]

[Fig. 1]

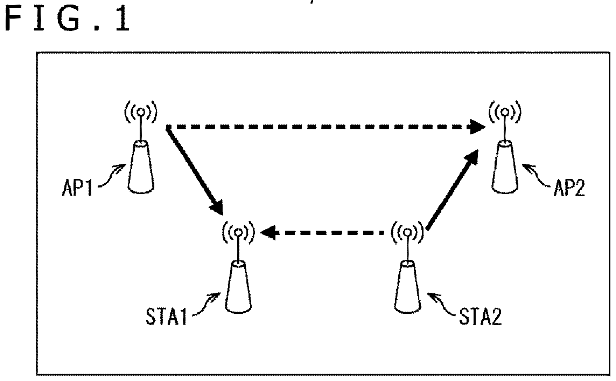

Fig. 1 is a diagram depicting a configuration example of a wireless network.
[Fig. 2]

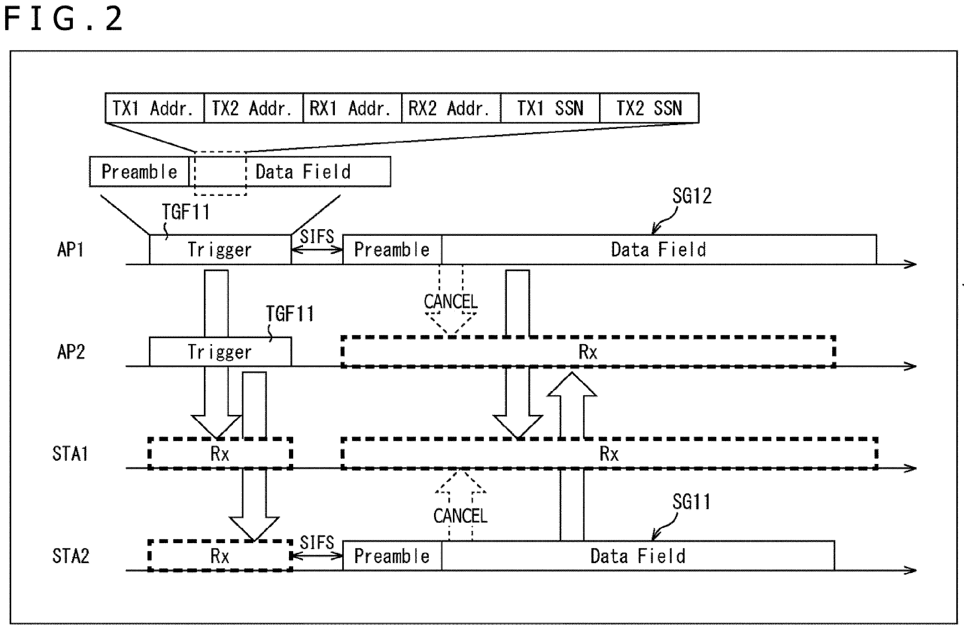

Fig. 2 is a diagram for explaining interference removal during communication using spatial reuse.
[Fig. 3]

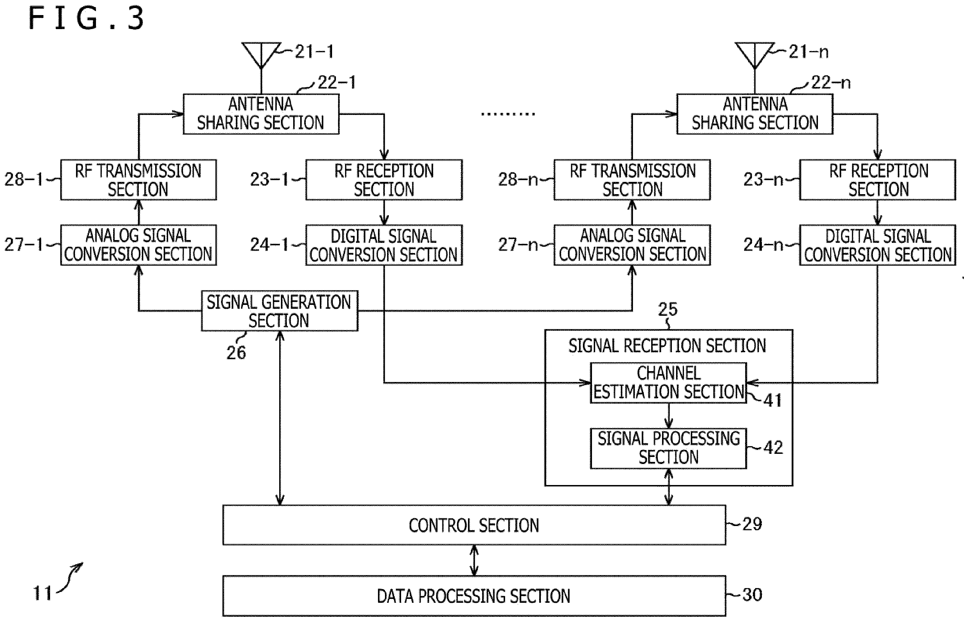

Fig. 3 is a diagram depicting a configuration example of a wireless communication device.
[Fig. 4]

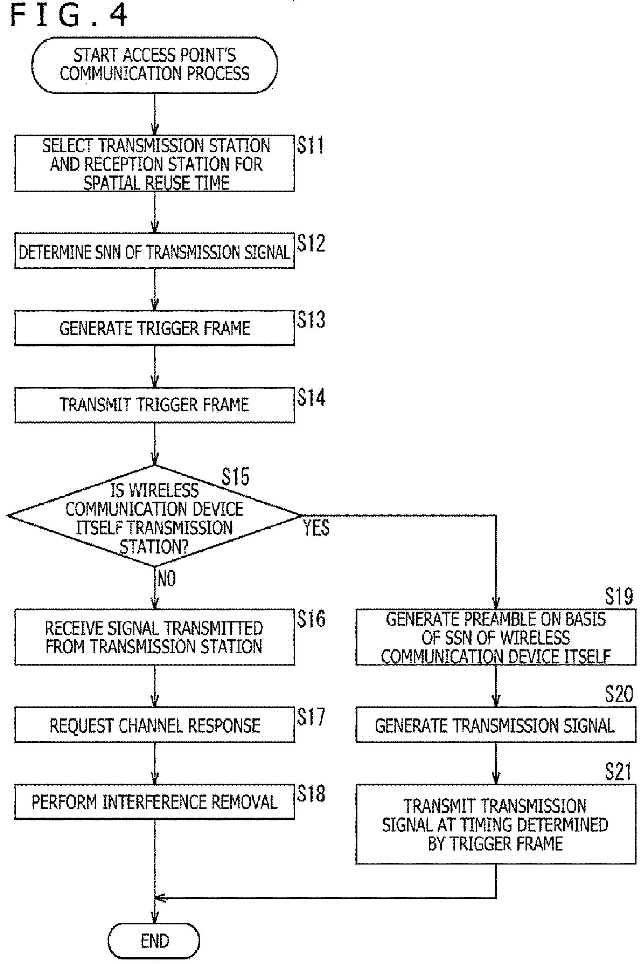

Fig. 4 is a flowchart for explaining an access point's communication process.
[Fig. 5]

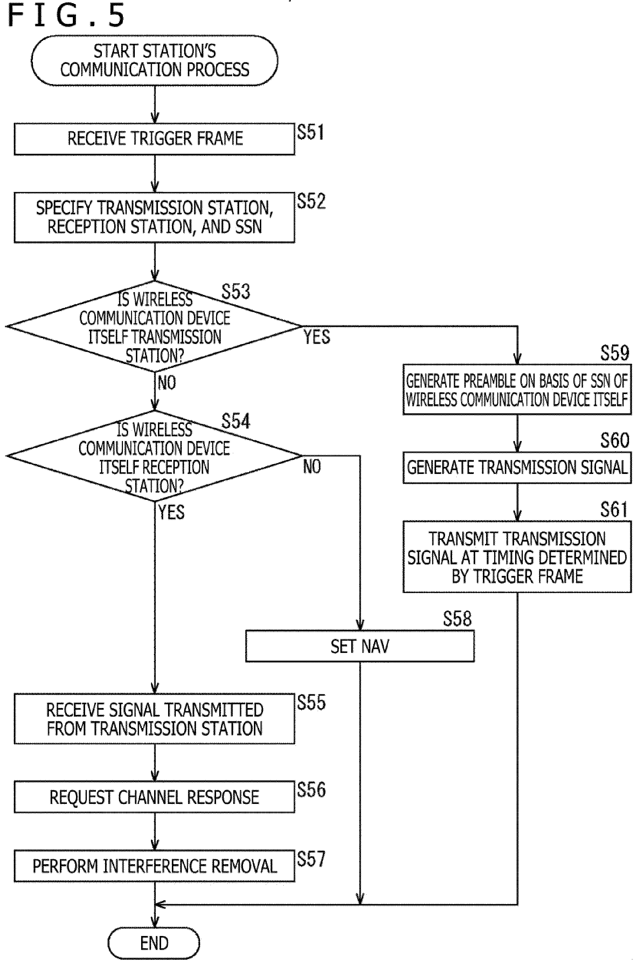

Fig. 5 is a flowchart of explaining a station's communication process.
[Fig. 6]

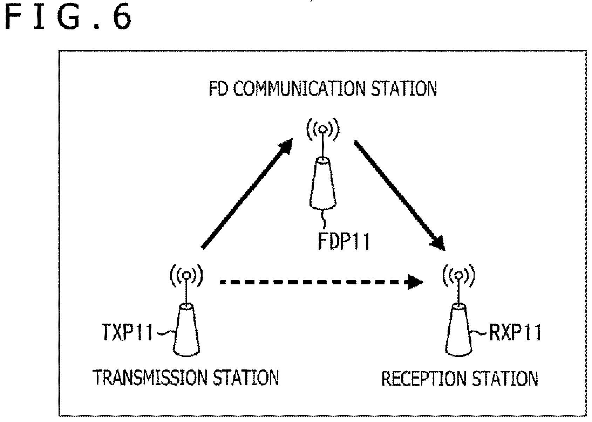

Fig. 6 is a diagram depicting a configuration example of a wireless network.
[Fig. 7]

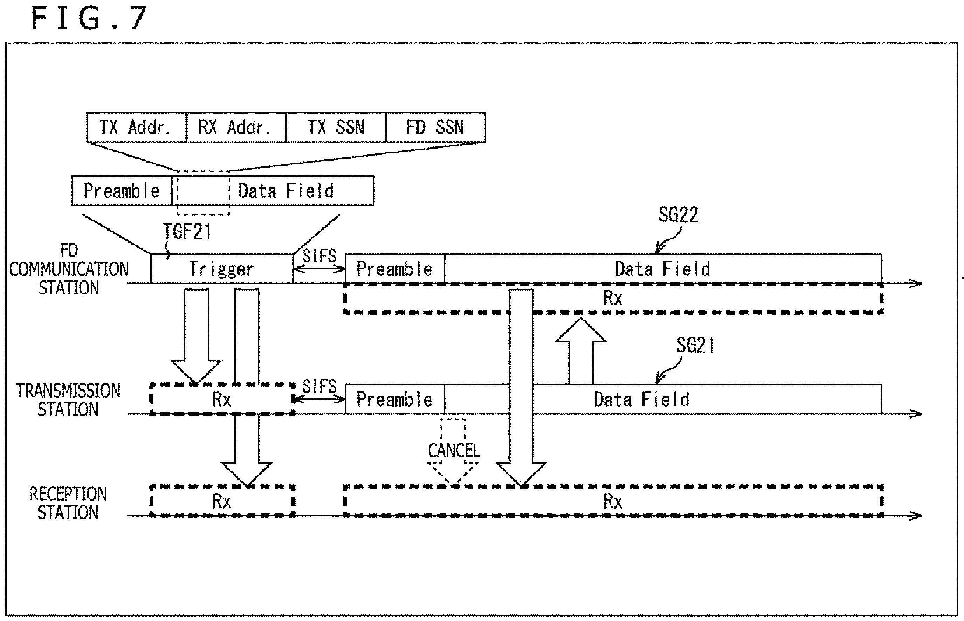

Fig. 7 is a diagram for explaining interference removal during unidirectional full duplex communication.
[Fig. 8]

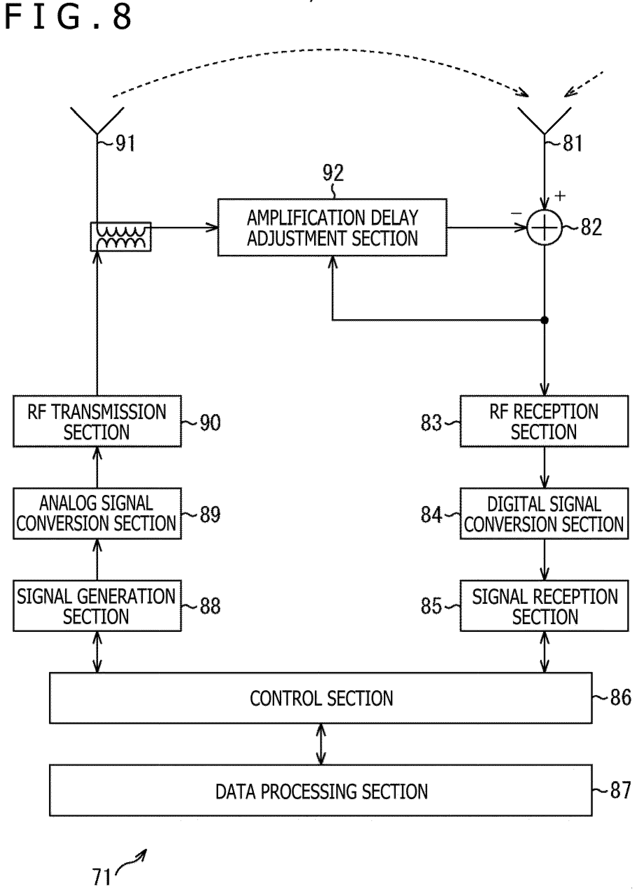

Fig. 8 is a diagram depicting a configuration example of an FD communication station.
[Fig. 9]

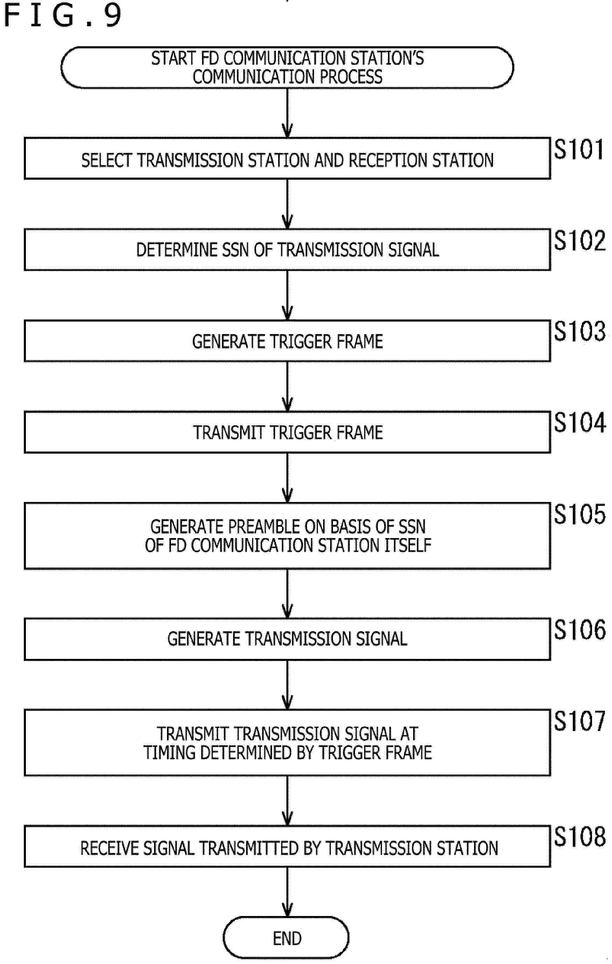

Fig. 9 is a flowchart for explaining an FD communication station's communication process.
[Fig. 10]

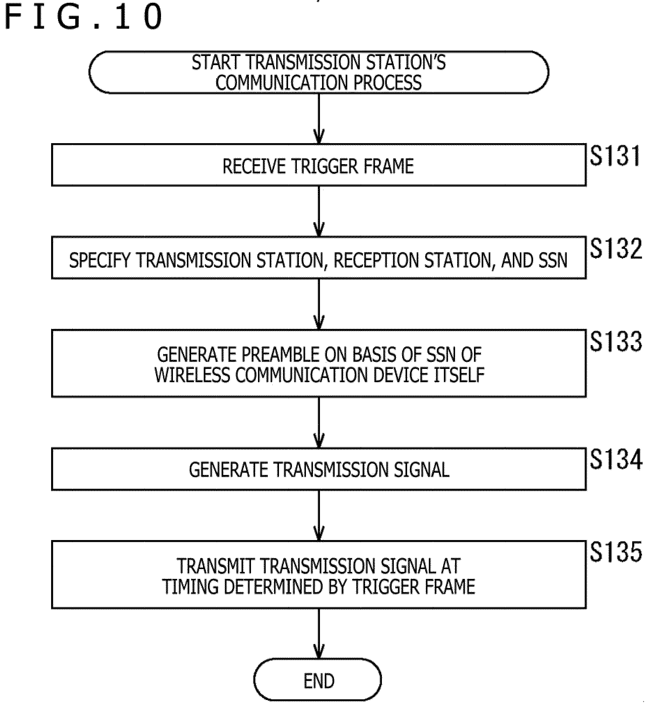

Fig. 10 is a flowchart for explaining a transmission station's communication process.
[Fig. 11]

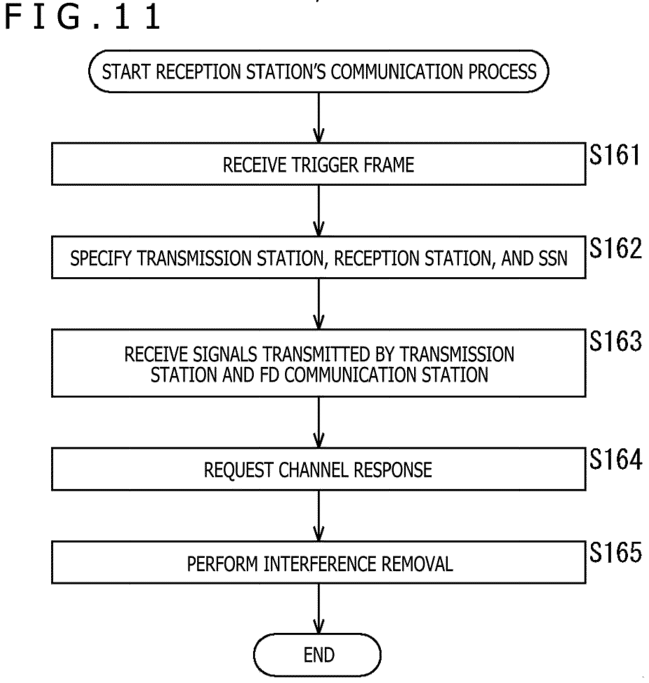

Fig. 11 is a flowchart for explaining a reception station's communication process.
[Fig. 12]

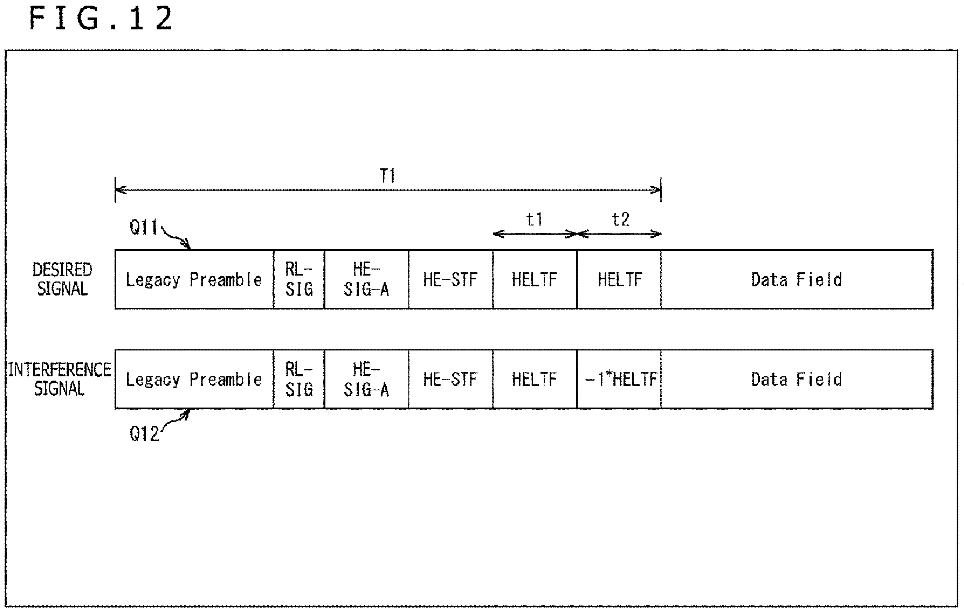

Fig. 12 is a diagram for explaining the configuration of a transmission signal.
[Fig. 13]

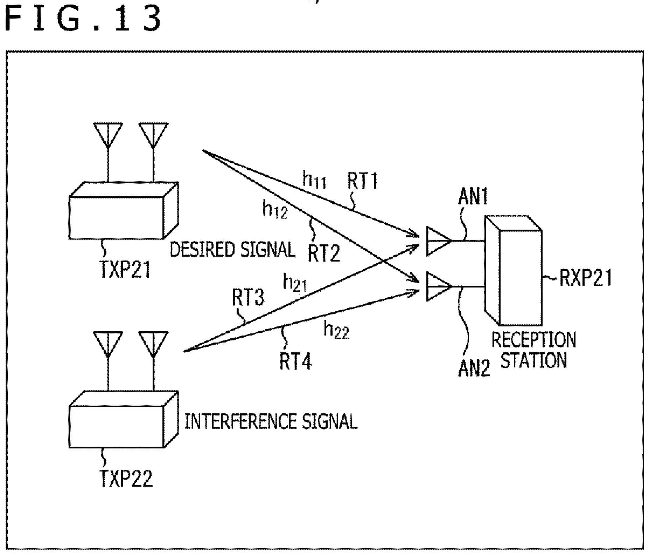

Fig. 13 is a diagram for explaining removal of an interference signal.
[Fig. 14]

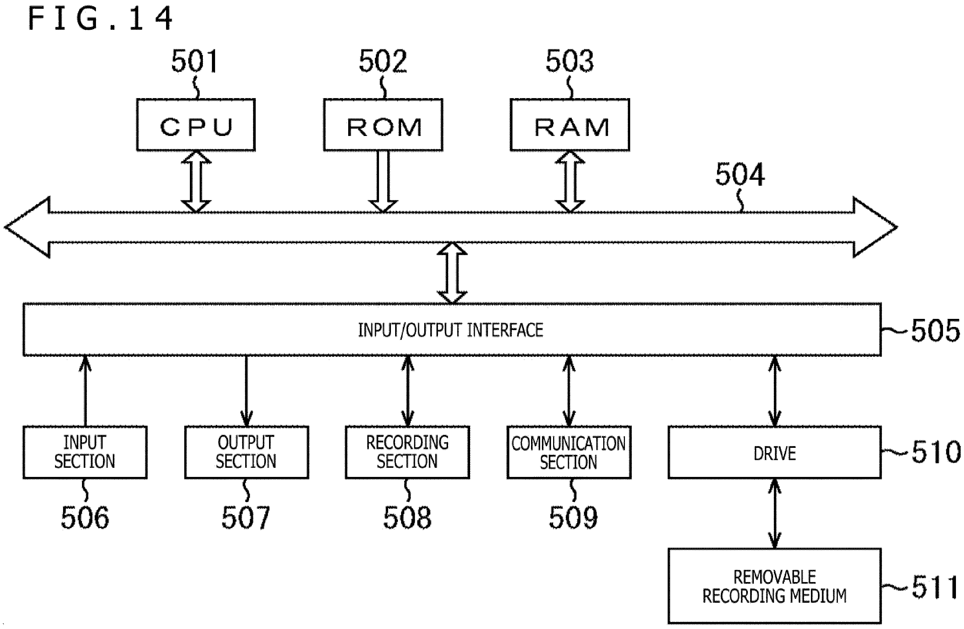

Fig. 14 is a diagram depicting a configuration example of a computer.

[Description of Embodiments]

Hereinafter, embodiments to which the present technique has been applied will be explained with reference to the drawings.

<First Embodiment>

<Configuration Example of Wireless Network>

According to the present technique, a plurality of wireless communication devices to simultaneously transmit signals and the signal pattern of a specific section in each of the signals to be transmitted are designated by a trigger frame such that signals are simultaneously transmitted from the plurality of designated wireless communication devices, whereby the communication success rate can be more easily improved.

Hereinafter, an explanation will be first given of a case where the present technique has been applied to a wireless network in which signals are transmitted by use of the spatial reuse technique.

For example, in a case where wireless communication is performed in accordance with IEEE802.11ax, a wireless network is configured as depicted in Fig. 1.

In Fig. 1, a wireless communication device AP1 and a wireless communication device STA1 constitute one BSS, and a wireless communication device AP2 and a wireless communication device STA2 constitute one BSS.

Further, the wireless communication device AP1 and the wireless communication device AP2 are access points (AP), and the wireless communication device STA1 and the wireless communication device STA2 are stations (STA).

In this example, the wireless communication device AP1 transmits an SR signal to the wireless communication device STA1. Simultaneously, the wireless communication device STA2 transmits an SR signal to the wireless communication device AP2.

Specifically, the wireless communication device AP1 and the wireless communication device STA2 each function as a transmission station for transmitting a signal, while the wireless communication device STA1 and the wireless communication device AP2 each function as a reception station for receiving a signal.

Note that, hereinafter, a signal which is addressed to a certain reception station and which the reception station is trying to receive, that is, a target signal is referred to as a desired signal for the reception station, and a non-target signal which is not addressed to the reception station, is also referred to as an interference signal for the reception station. Moreover, a transmission station which is the transmission source of an interference signal is particularly also referred to as an interference station for the reception station.

In the example depicted in Fig. 1, an SR signal transmitted from the wireless communication device AP1 is a desired signal for the wireless communication device STA1, but is an interference signal for the wireless communication device AP2. Similarly, an SR signal transmitted from the wireless communication device STA2 is a desired signal for the wireless communication device AP2, but is an interference signal for the wireless communication device STA1. In Fig. 1, solid arrows each indicate a desired signal (desired wave), and dotted arrows each indicate an interference signal (interference wave).

Thus, when SR signals are transmitted simultaneously in a plurality of BSSs by the spatial reuse technique, not only a desired signal but also an interference signal arrives at a reception station, so that an interference between the desired signal and the interference signal occurs. Accordingly, the reception station fails to receive the desired signal in some cases. This reduces the communication success rate.

In view of this, the present technique has been made to be able to more easily improve the communication success rate by using a trigger frame (trigger signal).

Specifically, according to the present technique, a trigger frame including a transmission device address indicating a transmission station which becomes a transmission source of an SR signal that is simultaneously transmitted during execution of spatial reuse, a reception device address indicating a reception station which becomes a transmission destination of an SR signal, and an SSN (Spatial Stream Number) for identifying each SR signal, is transmitted.

Here, an SSN is an identifier for identifying an SR signal which is a transmission signal transmitted from a transmission station, that is, for identifying a spatial stream.

According to the present technique, such an SSN is not only used as an identifier for a spatial stream, but is used as information indicating the signal pattern (setting pattern) of a predetermined specific section (field) in an SR signal. That is, an SSN is also used as designation information for designing the signal pattern of a predetermined specific section in an SR signal.

Consequently, by means of SSNs in a trigger frame, the signal pattern of a specific section in each of SR signals which are transmitted from a plurality of transmission stations, can be reported to the transmission station and the reception station.

When such a trigger frame is used, a plurality of transmission stations having received the trigger frame can simultaneously transmit SR signals by spatial reuse. In other words, the arrival time of a desired signal and the arrival time of an interference signal at a reception station can be set to match each other.

For example, when setting to cause a plurality of transmission stations to each transmit an SR signal after the elapse of a predetermined time from completion of reception of a trigger frame, is made, simultaneous transmission of SR signals from the transmission stations can be implemented. Therefore, the trigger frame itself can be regarded as a signal indicating the transmission timing of SR signals, that is, a signal for designating the transmission timing.

At a transmission station, an SR signal having a signal pattern indicated by an SSN of an SR signal (spatial stream) of the transmission section itself is generated and transmitted in accordance with a trigger frame. Here, for example, an SR signal a preamble of which includes a field having the signal pattern indicated by the SSN, is generated.

Also, at a reception station, channel estimation is performed on the basis of a received trigger frame and an SR signal transmitted from a transmission station after reception of the trigger frame.

That is, the reception station estimates the channel response of a link (channel) between the transmission station and the reception station and the channel response of a link between an interference station and the reception station, from received SR signals, that is, preambles of simultaneously received desired signal and interference signal, and a signal pattern determined by an SSN. Then, the reception station removes the interference signal from the SR signals by using a channel matrix which is obtained from the result of estimation of the channel responses.

In this case, in order to simultaneously estimate a channel response indicating the propagation characteristics of a channel of a desired signal, that is, the propagation characteristics of a communication path from a transmission station to a reception station and a channel response indicating the propagation characteristics of a channel of an interference signal, the reception station needs to have at least two or more antennas.

In particular, according to the present technique, in order to highly accurately estimate the channel response of a desired signal and the channel response of an interference signal, a preamble of the desired signal and a preamble of the interference signal need to be substantially simultaneously received by the reception station.

Regarding this point, transmission times of SR signals can be adjusted to match one another by means of a trigger frame, as described above. Thus, a reception station can easily estimate channel responses, remove an interference signal from received SR signals, and extract a target desired signal only. That is, the communication success rate can be more easily improved.

Note that, according to the present technique, when a trigger frame is generated, a transmission station and a reception station need to be selected in each of a plurality of BBSs. Therefore, an environment in which a cooperation process is performed among access points or an environment in which a plurality of BBSs is under centralized control management is assumed here.

Consequently, according to the present technique, an access point of one of two BSSs or access points of both the two BBSs simultaneously transmit trigger frames, for example. As a result of this, a transmission time (transmission timing) of an SR signal and a signal pattern of a preamble thereof can be reported (designated) to a transmission station of each of the BBSs in which spatial reuse is performed, and further, the signal pattern of the preamble of each of the SR signals can be reported to a reception station in each of the BBSs.

<Interference Removal during Spatial Reuse>

Hereinafter, a more specific embodiment will be explained.

Here, as a specific example, an explanation will be given of a case where the wireless communication device AP1 transmits an SR signal to the wireless communication device STA1, and simultaneously, the wireless communication device STA2 transmits an SR signal to the wireless communication device AP2, as depicted in Fig. 1. Hereinafter, particularly, the BBS including the wireless communication device AP1 and the wireless communication device STA1 is also referred to as BSS1, and the BBS including the wireless communication device AP2 and the wireless communication device STA2 is also referred to as BSS2.

In addition, it is assumed that the wireless communication device AP1 and the wireless communication device AP2 which are access points are under centralized control management, or that the wireless communication device AP1 and the wireless communication device AP2 cooperate with each other.

In this case, the wireless communication device AP1 and the wireless communication device AP2 simultaneously transmit trigger frames, as depicted in Fig. 2, for example.

Note that, in Fig. 2, the horizontal direction indicates a time, and "AP1," "AP2," "STA1," and "STA2" in Fig. 2 denote the wireless communication device AP1, the wireless communication device AP2, the wireless communication device STA1, and the wireless communication device STA2, respectively.

In this example, first, the wireless communication device AP1 and the wireless communication device AP2 simultaneously transmit trigger frames TGF11 denoted by "Trigger."

Here, the trigger frame TGF11 includes a preamble part denoted by "Preamble" and a data (payload) part denoted by "Data Field."

In addition, the data part, that is, the data field includes a transmission device address, a reception device address, and an SSN. That is, the transmission device address, the reception device address, and the SSN are written in the data field.

Specifically, "TX1 Addr." denotes a transmission device address indicating a transmission station in the BSS1. Here, the transmission device address denoted by "TX1 Addr." represents an address for specifying the wireless communication device AP1 which is a transmission station in the BSS1.

Similarly, "TX2 Addr." denotes a transmission device address indicating a transmission station in the BSS2. Here, the transmission device address denoted by "TX2 Addr." represents an address for specifying the wireless communication device STA2 which is a transmission station in the BSS2.

In addition, "RX1 Addr." denotes a reception device address indicating a reception station in the BSS1. Here, the reception device address denoted by "RX1 Addr." represents an address for specifying the wireless communication device STA1 which is a reception station in the BSS1.

"RX2 Addr." denotes a reception device address indicating a reception station in the BSS2. Here, the reception device address denoted by "RX2 Addr." represents an address for specifying the wireless communication device AP2 which is a reception station in the BSS2.

Moreover, "TX1 SSN" denotes the SSN of an SR signal (transmission signal) which is transmitted by a transmission station in the BSS1, and "TX2 SSN" denotes the SSN of an SR signal which is transmitted by a transmission station in the BSS2. These SSNs are designated for next SR signals to be transmitted from the corresponding transmission stations.

For example, 0 or 1 is set for the value of an SSN, and different values are set for the SSN denoted by "TX1 SSN" and the SSN denoted by "TX2 SSN." Specifically, for example, the value of 0 is set for the SSN denoted by "TX1 SSN," and the value of 1 is set for the SSN denoted by "TX2 SSN."

Note that an explanation will be given here of an example in which a transmission device address and a reception device address are used as information for designating a transmission station and a reception station. However, any type of information may be used therefor. Similarly, information for designating a signal pattern of each of SR signals is also not limited to an SSN, and any type of information can be used therefor.

Thus, when the trigger frames TGF11 are transmitted from the wireless communication device AP1 and the wireless communication device AP2, the transmitted trigger frames TGF11 are received by the wireless communication device STA1 and the wireless communication device STA2, as indicated by arrows in Fig. 2.

Note that, here, the trigger frames TGF11 are transmitted from the wireless communication device AP1 and the wireless communication device AP2 here, and the transmission timings of the trigger frames TGF11 may be deviated from each other. However, for the wireless communication device STA1 and the wireless communication device STA2, such a deviation in transmission timings is equivalent to a multipath effect. Therefore, the deviation in transmission timings can be compensated by an equalizer.

Further, an explanation is given here of an example in which both the wireless communication device AP1 and the wireless communication device AP2 transmit the trigger frames TGF11. However, only either one of the wireless communication device AP1 and the wireless communication device AP2 may transmit the trigger frame TGF11.

By receiving the trigger frame TGF11, the wireless communication device STA1 can specify that the wireless communication device STA1 itself is a reception station, from the reception device address denoted by "RX1 Addr."

In addition, the wireless communication device STA1 can specify the signal pattern of a preamble of an SR signal in the BSS1, from the SSN denoted by "TX1 SSN" in the received trigger frame TGF11, and can specify the signal pattern of a preamble of an SR signal in the BSS2, from the SSN denoted by "TX2 SSN."

The wireless communication device STA1 having grasped that the wireless communication device STA1 itself is a reception station prepares and waits for reception of SR signals of the BSS1 and the BSS2 because such SR signals will be transmitted to the wireless communication device STA1.

Further, from the trigger frame TGF11, the wireless communication device AP2 having transmitted the trigger frame TGF11 has grasped that the wireless communication device AP2 itself is a reception station and grasped the signal patterns of SR signals, and thus, prepares and waits for reception of the SR signals.

Moreover, from the received trigger frame TGF11, a wireless communication device (not depicted here) which has grasped that the wireless communication device itself is neither a transmission station nor a reception station, sets an NAV (Network Allocation Vector), and enters a waiting state so as not to inhibit the following communication.

Meanwhile, by receiving the trigger frame TGF11, the wireless communication device STA2 can specify, from the transmission device address denoted by "TX2 Addr.," that the wireless communication device STA2 itself is a transmission station.

Further, from the SSN denoted by "TX2 SSN" in the received trigger frame TGF11, the wireless communication device STA2 can specify the signal pattern of a preamble of an SR signal of the BSS2, which the wireless communication device STA2 itself will transmit.

Therefore, the wireless communication device STA2 generates a preamble including a field having a signal pattern determined by the SSN denoted by "TX2 SSN," and generates an SR signal SG11 having the generated preamble.

Here, the SR signal SG11 includes a preamble part denoted by "Preamble" and a data (payload) part denoted by "Data Field." In particular, a predetermined specific field part in the preamble of the SR signal SG11 has the signal pattern determined by the SSN denoted by "TX2 SSN."

In addition, after the elapse of a predetermined fixed waiting time such as SIFS (Short Inter Frame Space) from completion of reception of the trigger frame TGF11, the wireless communication device STA2 which is a transmission station transmits the generated SR signal SG11 of the BSS2.

The SR signal SG11 of the BBS2 is a desired signal for the wireless communication device AP2 in the BSS2, and is an interference signal for the wireless communication device STA1 in the BSS1.

Also, similar to the wireless communication device STA2, the wireless communication device AP1 having transmitted the trigger frame TGF11 generates an SR signal SG12 of the BSS1 because the wireless communication device AP1 has, from the trigger frame TGF11, grasped that the wireless communication device AP1 itself is a transmission station and grasped the signal pattern of an SR signal which the wireless communication device AP1 itself transmits.

The SR signal SG12 includes a preamble part denoted by "Preamble" and a data (payload) part denoted by "Data Field." In particular, a predetermined specific field part of the preamble in the SR signal SG12 has a signal pattern determined by the SSN denoted by "TX1 SSN."

The SSN having a different value for each of the SR signals is stored in the trigger frame TGF11, and thus, the respective specific field parts of the SR signals such as the SR signal SG11 and the SR signal SG12 have different signal patterns. In other words, the different signal patterns for the respective SR signals are designated by the SSNs.

Moreover, after the elapse of a predetermined fixed time such as SIFS from completion of transmission of the trigger frame TGF11, the wireless communication device AP1 which is a transmission station transmits the generated SR signal SG12 of the BSS1.

Here, the waiting time that is taken until the SR signal SG12 is transmitted is set to be equal to a waiting time that is taken until the SR signal SG11 is transmitted. That is, the SR signal SG11 and the SR signal SG12 are substantially simultaneously transmitted.

The SR signal SG12 of the BSS1 is an interference signal for the wireless communication device AP2 in the BSS2, and is a desired signal for the wireless communication device STA1 in the BSS1.

Thus, since the same trigger frames TGF11 are transmitted to respective transmission stations in the BBSs, the transmission stations can transmit substantially simultaneously SR signals by using the trigger frames TGF11 as a trigger.

The wireless communication device STA1 which is a reception station receives the SR signal SG11 and SR signal SG12 having been substantially simultaneously transmitted, more specifically, receives a signal including the SR signal SG11 and the SR signal SG12.

Then, from the preamble part of the received signal, the wireless communication device STA1 estimates the channel response of the link (channel) of the SR signal SG12 which is a desired signal and the channel response of the link of the SR signal SG11 which is an interference signal.

Here, the SSN of the SR signal of the BSS1 and the SSN of the SR signal of the BSS2 included in the trigger frame TGF11 are used for estimation of the channel responses.

When a signal component having the signal pattern determined by the SSN of the SR signal of the BSS1 and a signal component having the signal pattern determined by the SSN of the SR signal of the BSS2 are included in the same section of the received signal, the channel responses of the channels of the desired signal and the interference signal can be highly accurately obtained through channel estimation.

In other words, in order to highly accurately obtain the channel responses, a part having the signal pattern determined by the SSN of the SR signal of the BSS1 and a part having the signal pattern determined by the SSN of the BSS2 need to be substantially simultaneously received by the wireless communication device STA1.

Therefore, here, the trigger frame TGF11 is transmitted and received, that is, the transmission timings of the SR signals are set to a time after a fixed time from completion of transmission and reception of the trigger frame TGF11, whereby the SR signal SG11 and the SR signal SG12 are substantially simultaneously transmitted.

Moreover, the wireless communication device STA1 performs interference removal of the interference signal from the received signal on the basis of the channel responses obtained through the estimation, that is, cancels the interference signal, thereby obtains the SR signal SG12 which is a target.

Similarly, the wireless communication device AP2 which is a reception station receives the SR signal SG11 and SR signal SG12 that have been substantially simultaneously transmitted, and estimates the channel response of the link of the SR signal SG11 which is a desired signal and the channel response of the link of the SR signal SG12 which is an interference signal.

In addition, the wireless communication device AP2 performs interference removal of the interference signal from the received signal on the basis of the channel response obtained through the estimation, thereby obtains the SR signal SG11 which is a target.

As explained above, according to the present technique, with use of trigger frames, an interference signal can be easily canceled, so that the reception success rate of a desired signal, that is, the communication success rate can be improved.

Note that the example in which the wireless communication device AP1 and the wireless communication device STA2 are transmission stations has been explained herein. However, there are actually a number of combinations of wireless communication devices as transmission stations. Any combination can be used.

Specifically, for example, the wireless communication device AP1 and the wireless communication device AP2 may be transmission stations, the wireless communication device STA1 and the wireless communication device STA2 may be transmission stations, or the wireless communication device AP2 and the wireless communication device STA1 may be transmission stations.

Also, the example in which the number of transmission stations is two has been explained herein. However, the number of transmission stations may be three or more. In this case, each of the reception stations receives a signal including two or more interference signals and one desired signal, the interference signals are removed from the received signal, and the one desired signal is extracted.

<Configuration Example of Wireless Communication Device>

Next, a specific configuration example of a wireless communication device corresponding to the wireless communication device AP1, the wireless communication device AP2, the wireless communication device STA1, or the wireless communication device STA2, which have been explained above, will be explained with reference to Fig. 3.

Fig. 3 is a diagram depicting a configuration example of a wireless communication device to which the present technique has been applied.

A wireless communication device 11 depicted in Fig. 3 performs wireless communication with another wireless communication device.

The wireless communication device 11 includes antennas 21-1 to 21-n, antenna sharing sections 22-1 to 22-n, RF reception sections 23-1 to 23-n, digital signal conversion sections 24-1 to 24-n, a signal reception section 25, a signal generation section 26, analog signal conversion sections 27-1 to 27-n, RF transmission sections 28-1 to 28-n, a control section 29, and a data processing section 30.

The antennas 21-1 to 21-n wirelessly transmit transmission signals such as SR signals supplied from the RF transmission sections 28-1 to 28-n via the antenna sharing sections 22-1 to 22-n.

Moreover, the antennas 21-1 to 21-n receive wirelessly transmitted transmission signals, and supply, as reception signals, the received transmission signals to the RF reception sections 23-1 to 23-n via the antenna sharing sections 22-1 to 22-n.

Note that, in a case where the antennas 21-1 to 21-n do not need to be particularly distinguished from one another, they are also simply referred to as antennas 21, hereinafter.

In a case where the wireless communication device 11 serves as a reception station to remove an interference signal having been explained with reference to Fig. 2, at least two antennas 21 are necessary in the wireless communication device 11. However, in a case where the wireless communication device 11 serves as a transmission station only, one antenna 21 is sufficient.

The antenna sharing sections 22-1 to 22-n are switches for performing switching between transmission and reception.

More specifically, the antenna sharing sections 22-1 to 22-n supply transmission signals supplied from the RF transmission sections 28-1 to 28-n to the antennas 21-1 to 21-n, and supply reception signals supplied from the antennas 21-1 to 21-n to the RF reception sections 23-1 to 23-n.

Note that, in a case where the antenna sharing sections 22-1 to 22-n do not need to be particularly distinguished from one another, they are also simply referred to as antenna sharing sections 22, hereinafter.

The RF reception sections 23-1 to 23-n each include a low noise amplifier, an AGC (Auto Gain Control) section, a frequency converter, a filter, or the like, for example, and receive reception signals from the antennas 21 via the antenna sharing sections 22-1 to 22-n.

The RF reception sections 23-1 to 23-n perform various processing such as amplification, gain adjustment, frequency conversion, filtering, and the like, on received reception signals, as appropriate, and supply the reception signals to the digital signal conversion sections 24-1 to 24-n.

Note that, in a case where the RF reception sections 23-1 to 23-n do not need to be particularly distinguished from one another, they are also simply referred to as RF reception sections 23, hereinafter.

The digital signal conversion sections 24-1 to 24-n convert reception signals which are analog signals supplied from the RF reception sections 23-1 to 23-n, to digital signals through AD (Analog Digital) conversion, and supply the digital signals to the signal reception section 25.

Note that, in a case where the digital signal conversion sections 24-1 to 24-n do not need to be particularly distinguished from one another, they are also simply referred to as digital signal conversion sections 24, hereinafter.

The signal reception section 25 performs various processing such as demodulation on reception signals which are digital signals supplied from the digital signal conversion sections 24 under control by the control section 29, and supplies the resultant signals to the control section 29. The signal reception section 25 includes a channel estimation section 41 and a signal processing section 42.

The channel estimation section 41 performs channel estimation on the basis of the reception signals supplied from the digital signal conversion sections 24, and supplies the resultant channel responses and the reception signals to the signal processing section 42. The signal processing section 42 performs various processing such as equalization, interference removal, distortion compensation, demodulation, decoding, and the like, on the reception signals on the basis of the channel responses and the reception signals supplied from the channel estimation section 41, and supplies the resultant signals to the control section 29.

The control section 29 controls the overall operation of the wireless communication device 11. For example, the control section 29 supplies reception signals supplied from the signal processing section 42 to the data processing section 30, supplies data supplied from the data processing section 30 to the signal generation section 26, and further, identifies a type of a reception signal, or controls the transmission timing of a transmission signal.

The data processing section 30 extracts, from a reception signal supplied from the control section 29, payload data of the reception signal, and generates payload data of a transmission signal and supplies the transmission signal to the control section 29.

The signal generation section 26 generates a transmission signal in a predetermined format by performing encoding on the basis of the data, etc., supplied from the data processing section 30 via the control section 29, performs modulation on the transmission signal, and supplies the transmission signal to the analog signal conversion sections 27-1 to 27-n.

The analog signal conversion sections 27-1 to 27-n each convert the transmission signal supplied from the signal generation section 26 from a digital signal to an analog signal through DA (Digital Analog) conversion, and supply the resultant signals to the RF transmission sections 28-1 to 28-n.

Note that, in a case where the analog signal conversion sections 27-1 to 27-n do not need to be particularly distinguished from one another, they are also simply referred to as analog signal conversion sections 27, hereinafter.

The RF transmission sections 28-1 to 28-n are each configured by a frequency converter, an amplifier, a filter, or the like, for example, and perform frequency conversion, amplification, filtering, etc., on transmission signals supplied from the analog signal conversion sections 27-1 to 27-n, and supply the resultant signals to the antenna sharing sections 22-1 to 22-n.

Note that, in a case where the RF transmission sections 28-1 to 28-n do not need to be particularly distinguished from one another, they are also simply referred to as RF transmission sections 28, hereinafter.

<Access Point's Communication Processing>

Next, the operation of the wireless communication device 11 depicted in Fig. 3 will be explained.

First, with reference to a flowchart in Fig. 4, an explanation will be given of an example of an access point's communication process which is performed when the wireless communication device 11 serving as an access point performs the wireless communication having been explained with reference to Fig. 2.

At step S11, the control section 29 selects a transmission station and a reception station for a spatial reuse time.

For example, in a case where a wireless communication device 11 which is an access point cooperates with another wireless communication device which is an access point, the control section 29 selects a transmission station and a reception station in each of BSSs on the basis of the traffic conditions of wireless communication devices in each of the BSSs.

Thus, for example, the wireless communication device AP1 and the wireless communication device STA2 are transmitted as transmission stations, and the wireless communication device STA1 and the wireless communication device AP2 are selected as reception stations, in the example in Fig. 2.

Note that, in a case where the BSSs are under centralized control management, transmission stations and reception stations are selected by means of a controller for performing centralized management of each of the BSSs, and the control section 29 acquires the selection result of the transmission stations and the reception stations from the controller.

At step S12, the control section 29 determines SSNs of the transmission stations in the respective BSSs, that is, SSNs of transmission signals which are transmitted from the transmission stations. Here, different SSNs are determined for respective transmission signals.

After the SSNs are determined, the control section 29 supplies the determined SSNs of respective transmission signals, transmission device addresses indicating the transmission stations selected at step S11, and reception device addresses indicating the reception stations selected at step S11, to the signal generation section 26.

At step S13, the signal generation section 26 generates a trigger frame including the SSNs, the transmission device addresses, and the reception device addresses on the basis of the SSNs, the transmission device addresses, and the reception device addresses which are supplied from the control section 29. As a result, the trigger frame TGF11 depicted in Fig. 2, for example, is generated.

The signal generation section 26 supplies the generated trigger frame to the analog signal conversion section 27. The analog signal conversion section 27 performs DA conversion on the trigger frame from the signal generation section 26, and supplies the resultant analog trigger frame to the RF transmission section 28.

At step S14, the RF transmission section 28 transmits, through the antennas 21, the trigger frame supplied from the analog signal conversion section 27.

More specifically, for example, the RF transmission section 28 performs frequency conversion, amplification, filtering, etc., on the trigger frame, as appropriate, and then, outputs the trigger frame to the antennas 21 via the antenna sharing sections 22 so that the trigger frame is transmitted.

Here, a plurality of wireless communication devices including the wireless communication device 11, which are access points in a plurality of BSSs, cooperate with one another, so that trigger frames are simultaneously transmitted from the wireless communication devices. However, a trigger frame may be transmitted from the wireless communication device 11 only.

At step S15, the control section 29 determines whether or not the wireless communication device 11 itself is a transmission station, on the basis of the selection result at step S11.

For example, in a case where the wireless communication device 11 has been selected as a transmission station at step S11, the wireless communication device 11 itself is determined to be a transmission station at step S15.

In a case where the wireless communication device 11 itself is determined to be not a transmission station at step S15, that is, in a case where the wireless communication device 11 itself is a reception station, the process proceeds to step S16. The wireless communication device 11 waits until an SR signal is transmitted from a transmission station.

Then, when a signal is transmitted from the transmission station, the antenna 21 receives, as a reception signal, as the signal transmitted from the transmission station at step S16. That is, the RF reception section 23 receives a reception signal through the antenna 21.

The RF reception section 23 acquires the reception signal received by the antenna 21 via the antenna sharing section 22, performs various processing such as amplification on the reception signal, as appropriate, and supplies the resultant signal to the digital signal conversion section 24. The digital signal conversion section 24 performs AD conversion on the reception signal supplied from the RF reception section 23, and supplies the resultant signal to the channel estimation section 41.

For example, in the example depicted in Fig. 2, the SR signal SG11 and the SR signal SG12 are simultaneously received. Also, in a case where there are two transmission stations as in the example in Fig. 2, signals are received by at least two antennas 21 in the wireless communication device 11.

In particular, in this case, the antennas 21 each receive, as a reception signal, one signal including SR signals transmitted from a plurality of transmission stations. In other words, one desired signal which is interfering with one or more interference signals is received, as a reception signal, by one antenna 21.

At step S17, the channel estimation section 41 obtains a channel response on the basis of reception signals supplied from a plurality of the digital signal conversion sections 24.

For example, the SSNs of SR signals to be transmitted from the transmission stations determined at step S12 are supplied from the control section 29 to the channel estimation section 41.

The channel estimation section 41 performs channel estimation on the basis of SSNs of a plurality of SR signals supplied from the control section 29 and on the basis of a plurality of reception signals received by a plurality of the antennas 21 and supplied from a plurality of the digital signal conversion sections 24. As a result of the channel estimation, a channel response indicating the propagation characteristics of a channel from the transmission station to each of the antennas 21 is obtained.

After performing the channel estimation, the channel estimation section 41 supplies, to the signal processing section 42, the resultant channel response and the reception signals supplied from a plurality of the digital signal conversion sections 24.

At step S18, the signal processing section 42 performs interference removal on the reception signals supplied from the channel estimation section 41 on the basis of the channel response supplied from the channel estimation section 41, thereby removes interference signals from the reception signals.

Accordingly, an interference signal included in a reception signal received by the antennas 21 is canceled, so that only a desired signal is extracted. In other words, as a result of the interference removal, one of a plurality of transmission signals substantially simultaneously received by the antennas 21 is extracted as a desired signal.

The signal processing section 42 performs, on the reception signals, equalization, distortion compensation, demodulation, decoding, etc., in addition to interference removal, as appropriate. The signal processing section 42 supplies a desired signal finally obtained by the interference removal and the like, to the data processing section 30 via the control section 29, and the access point's communication process is ended.

In contrast, in a case where the wireless communication device 11 itself is determined to be a transmission station at step S15, the signal generation section 26 generates a preamble on the basis of the SSN of the wireless communication device 11 itself at step S19.

That is, the control section 29 makes an instruction to generate a transmission signal (SR signal), by supplying the SSN of a transmission signal of the wireless communication device 11 itself as a transmission station determined at step S12, the payload data, and the like to the signal generation section 26. In accordance with the instruction from the control section 29, the signal generation section 26 generates a preamble including a field having a signal pattern indicated by the SSN supplied from the control section 29.

At step S20, the signal generation section 26 generates a transmission signal (SR signal) having the preamble generated at step S19 and having, as a payload, data supplied from the control section 29.

At step S21, the antenna 21 transmits the transmission signal at a timing determined by the trigger frame, and then, the access point's communication process is ended.

For example, the control section 29 instructs the signal generation section 26 to transmit the transmission signal, after the elapse of a predetermined time such as SIFS from the end of transmission of the trigger frame at step S14. Then, in accordance with the instruction from the control section 29, the signal generation section 26 performs modulation, etc., on the transmission signal generated at step S20, as appropriate, and supplies the resultant signal to the analog signal conversion section 27.

The analog signal conversion section 27 performs DA conversion on the transmission signal supplied from the signal generation section 26, and supplies the resultant signal to the RF transmission section 28. The RF transmission section 28 performs frequency conversion, etc., on the transmission signal supplied from the analog signal conversion section 27, as appropriate, and then, supplies the resultant signal to the antenna 21 via the antenna sharing section 22 such that the transmission signal is wirelessly transmitted.

Thus, the wireless communication device 11 functioning as an access point generates and transmits a trigger frame including an SSN, a transmission device address, and a reception device address, and transmits a transmission signal or receives a reception signal on the basis of whether the wireless communication device 11 itself is a transmission station or a reception station. At this time, a transmission signal including a signal pattern determined by an SSN in the trigger frame is generated.

Accordingly, only by generation and transmission of a trigger frame, transmission signals of transmission stations can substantially simultaneously arrive at a reception station, and further, channel estimation can be highly accurately performed with use of an SSN in a trigger frame. As a result, the communication success rate can be more easily improved.

<Station's Communication Process>

Further, in a case where the communication process having been explained with reference to Fig. 4 is executed by an access point, a wireless communication device 11 which is not an access point but functions as a station, executes a process in Fig. 5.

Hereinafter, with reference to a flowchart in Fig. 5, an explanation will be given of an example of a station's communication process which is executed when a wireless communication device 11 which is a station performs the wireless communication having been explained with reference to Fig. 2.

At step S51, the antenna 21 receives the trigger frame transmitted from the access point. That is, the RF reception section 23 receives the trigger frame via the antenna 21.

The RF reception section 23 acquires the trigger frame received by the antenna 21 via the antenna sharing section 22, performs various processing such as amplification on the trigger frame, as appropriate, and supplies the resultant trigger frame to the digital signal conversion section 24.

The digital signal conversion section 24 performs AD conversion on the trigger frame supplied from the RF reception section 23, and supplies the resultant frame to the data processing section 30 via the channel estimation section 41, the signal processing section 42, and the control section 29. The data processing section 30 extracts various pieces of information including a transmission device address, a reception device address, and an SSN from the supplied trigger frame, and supplies the information to the control section 29.

Here, the trigger frame transmitted at step S14 in Fig. 4 is received at step S51.

At step S52, the control section 29 specifies the transmission station, the reception station, and the SSN of a transmission signal of the transmission station on the basis of the transmission device address, the reception device address, and the SSN read from the trigger frame supplied from the data processing section 30. On the basis of the specification result, the wireless communication device 11 can grasp that the wireless communication device 11 itself is a transmission station, a reception station, or neither of them.

For example, in the example in Fig. 2, as a result of reception of the trigger frame TGF11, it is specified that the wireless communication device AP1 and the wireless communication device STA2 are transmission stations, and that the wireless communication device STA1 and the wireless communication device AP2 are reception stations, and further, the SSNs of transmission signals (SR signals) of the transmission stations are specified.

At step S53, on the basis of the specification result at step S52, the control section 29 determines whether or not the wireless communication device 11 itself is a transmission station.

In a case where the wireless communication device 11 itself is determined to be not a transmission station at step S53, the control section 29 determines, at step S54, whether or not the wireless communication device 11 itself is a reception station on the basis of the specification result at step S52.

In a case where the wireless communication device 11 itself is determined to be a reception station at step S54, the process proceeds to step S55, and the wireless communication device 11 waits until an SR signal is transmitted from a transmission station.

When an SR signal is transmitted from a transmission station after the elapse of a certain time, steps S55 to S57 are subsequently executed, and then, the station's communication process is ended. These steps are identical to steps S16 to S18 in Fig. 4, and thus, an explanation thereof is omitted. However, at step S56, channel estimation is performed with use of the SSNs specified at step S52.

A signal received at step S55 is a signal that arrives at the wireless communication device 11 as a result of execution of step S21 in Fig. 4 or step S61 in Fig. 5 by a plurality of transmission stations.

Also, in a case where the wireless communication device 11 itself is determined to be not a reception station at step S54, the control section 29 sets an NAV at step S58 because the wireless communication device 11 is neither a transmission station nor a reception station, and the station's communication process is ended. In this case, the control section 29 decrements the set NAV every certain time period and then, waits until the value of the NAV reaches 0.

Also, in a case where the wireless communication device 11 itself is determined to be a transmission station at step S53, the process proceeds to step S59. Then, steps S59 to S61 are executed, and thus, the station's communication process is ended. However, these steps are identical to steps S19 to S21 in Fig. 4, and thus, an explanation thereof is omitted.

However, at step S59, a preamble is generated with use of the SSN specified at step S52. At step S61, a transmission signal is transmitted after the elapse of a predetermined time such as SIFS from completion of reception of a trigger frame at the wireless communication device 11.

Thus, the transmission signal transmitted at step S61 and a substantially simultaneously transmitted transmission signal from another transmission station are received at step S16 in Fig. 4 or in a process corresponding to step S55 which is executed by the other reception station.

As explained above, a wireless communication device 11 functioning as a station receives a trigger frame including an SSN, a transmission device address, and a reception device address, and transmits a transmission signal or receives a reception signal in accordance with whether or not the wireless communication device 11 itself is a transmission station or a reception station. At this time, a transmission signal including a signal pattern determined by an SSN in the trigger frame is generated.

Accordingly, only by reception of a trigger frame and extraction of information such as transmission device addresses therefrom, transmission signals of transmission stations can substantially simultaneously arrive at a reception station, and further, channel estimation can be highly accurately performed with use of the SSN in the trigger frame. As a result, the communication success rate can be more easily improved.

When the present technique is applied to a wireless network which performs communication using spatial reuse, as explained above, an interference signal included in a reception signal is canceled with use of a multiantenna such as a plurality of antennas 21, so that the communication success rate can be improved. In other words, communication using spatial reuse can be more efficiently performed or frequency resources can be most effectively used in a congestive environment, for example, so that an effect provided by the communication using spatial reuse can be improved.

<Second Embodiment>

<Configuration Example of Wireless Network>

As an example, the case where the present technique has been applied to a wireless network which performs communication using a spatial reuse technique, has been explained above. However, the present technique is also applicable to a wireless network which performs unidirectional full duplex communication.

In this case, the wireless network is configured as depicted in Fig. 6, for example.

The wireless network depicted in Fig. 6 includes an FD communication station FDP11, a transmission station TXP11, and a reception station RXP11.

For example, the transmission station TXP11 and the reception station RXP11 are wireless communication devices selected as a transmission station and a reception station by the FD communication station FDP11, from among a plurality of wireless communication devices belonging to a wireless network being managed by the FD communication station FDP11.

During unidirectional full duplex communication, the transmission station TXP11 transmits a transmission signal addressed to the FD communication station FDP11, and the FD communication station FDP11 simultaneously transmits a transmission signal addressed to the reception station RXP11. Therefore, the FD communication station FDP11 constantly functions as both a transmission station and a reception station during the unidirectional full duplex communication.

In this example, the transmission signal transmitted from the transmission station TXP11 is a desired signal for the FD communication station FDP11. However, the transmission signal transmitted from the FD communication station FDP11 is a desired signal for the reception station RXP11, and the transmission signal transmitted from the transmission station TXP11 is an interference signal for the reception station RXP11. Note that, in Fig. 6, solid arrows each indicate a desired signal (desired wave), and a dotted arrow indicates an interference signal (interference wave).

Thus, also in a case where unidirectional full duplex communication is performed, not only a desired signal but also an interference signal arrives at a reception station, as in the communication using spatial reuse. Therefore, an interference between the desired signal and the interference signal occurs, and the reception station may fail to receive the desired signal in some cases.

Therefore, according to the present technique, the communication success rate can be more easily improved with use of a trigger frame (trigger signal).

In other words, according to the present technique, during unidirectional full duplex communication, or more specifically, prior to the unidirectional full duplex communication, an FD communication station transmits a trigger frame. The trigger frame includes a transmission device address representing the transmission source of a transmission signal to be transmitted, that is, a transmission station, a reception device address representing the transmission destination of a transmission signal, that is, a reception station, and an SSN for identifying each of the transmission signals.

Note that, here, since not only the FD communication station but also the transmission station and the reception station have grasped that the FD communication station functions as a transmission station and a reception station, neither a transmission device address nor a reception device address representing the FD communication station is stored in the trigger frame. Also, each of the SSNs included in the trigger frame is also information indicating a signal pattern of a specific section of a preamble in a transmission signal, as in the first embodiment.

As a result of transmission of such a trigger frame, a wireless communication device which is as a transmission station, a wireless communication device which is a reception station, and a signal pattern of a specific section of each transmission signal can be reported to wireless communication devices through the trigger frame.

In addition, through transmission and reception of the trigger frame, a transmission timing of transmission signals is reported, a transmission time of a next transmission signal from the transmission station and a transmission time of a next transmission signal from the FD communication station can be set to substantially match each other.

Accordingly, a transmission signal which is a desired signal and a transmission signal which is an interference signal can substantially simultaneously arrive at a reception station. In addition, by using the trigger frame, the reception station can specify (identify) a signal pattern of a specific section of a preamble in each transmission signal.

Therefore, as in the first embodiment, the reception station can perform channel estimation on the basis of received signals and a signal pattern of each transmission signal, and further, can perform interference removal on the basis of the result of the channel estimation. Accordingly, a signal in which the interference signal has been canceled, that is, a target desired signal can be obtained.

As a result of this, also in a case where unidirectional full duplex communication is performed, channel responses can be highly accurately obtained so that the communication success rate can be easily improved.

<Interference Removal During Unidirectional Full Duplex Communication>

Hereinafter, a more specific embodiment will be explained.

Also in interference removal during unidirectional full duplex communication, transmission times of transmission signals need to be set to match one another in order to cancel an interference signal, as in an example of spatial reuse, such that the arrival time of the interference signal is substantially the same as the arrival time of a desired signal. This can be implemented by transmission of a trigger frame from an FD communication station.

Here, as a specific example, an explanation will be given on the assumption that the FD communication station FDP11, the transmission station TXP11, and the reception station RXP11 constitute a wireless network, as depicted in Fig. 6.

In this case, the FD communication station FDP11 transmits a trigger frame to each of the transmission station TXP11 and the reception station RXP11, as depicted in Fig. 7, for example. Note that, in Fig. 7, the horizontal axis direction indicates a time, and "FD communication station," "transmission station," and "reception station" in Fig. 7 denote the FD communication station FDP11, the transmission station TXP11, and the reception station RXP11, respectively.

In this example, first, the FD communication station FDP11 transmits a trigger frame TGF21 denoted by "Trigger."

In this case, the trigger frame TGF21 includes a preamble part denoted by "Preamble," and a data (payload) part denoted by "Data Field."

In addition, the aforementioned transmission device address, reception device address, and SSN are included in the data part, that is, a data field.

Specifically, "TX Addr." denotes a transmission device address indicating a transmission station. Here, the transmission device address denoted by "TX Addr." represents an address for specifying the transmission station TXP11.

In addition, "RX Addr." denotes a reception device address indicating a reception station. Here, the reception device address denoted by "RX Addr." represents an address for specifying the reception station RXP11.

Moreover, "TX SSN" denotes the SSN of a transmission signal which is transmitted from a transmission station, and "FD SSN" denotes the SSN of a transmission signal which is transmitted from the FD communication station FDP11. The SSNs are designated for next transmission signals from the transmission station TXP11 and the FD communication station FDP11.

For example, the value of an SSN is set to 0 or 1, for example. The SSN denoted by "TX SSN" and the SSN denoted by "FD SSN" are set to different values.

When the trigger frame TGF21 is transmitted from the FD communication station FDP11, the transmitted trigger frame TGF21 is received by each of the transmission station TXP11 and the reception station RXP11, as indicated by arrows in Fig. 7.

By receiving the trigger frame TGF21, the reception station RXP11 can specify, from the reception device address denoted by "RX Addr.," that the reception station RXP11 itself is a reception station.

In addition, the reception station RXP11 can specify, from the SSN denoted by "TX SSN" in the received trigger frame TGF21, a signal pattern of a preamble in a transmission signal, from the transmission station TXP11, as an interference signal, and can specify, from the SSN denoted by "FD SSN," a signal pattern of a preamble in a transmission signal, from the FD communication station FDP11, as a desired signal.

The reception station RXP11 having grasped that the reception station RXP11 itself is a reception station prepares and waits for reception of transmission signals from the transmission station TXP11 and the FD communication station FDP11, because these transmission signals will be transmitted.

Meanwhile, by receiving the trigger frame TGF21, the transmission station TXP11 can specify that the transmission station TXP11 itself is a transmission station from the transmission device address denoted by "TX Addr."

In addition, the transmission station TXP11 can specify, from the SSN denoted by "TX SSN" in the received trigger frame TGF21, a signal pattern of a preamble in a transmission signal to be transmitted from the transmission station TXP11 itself.

Thus, the transmission station TXP11 generates a preamble including a field having the signal pattern determined by the SSN denoted by "TX SSN," and generates a transmission signal SG21 having the generated preamble.

Here, the transmission signal SG21 includes a preamble part denoted by "Preamble" and a data (payload) part denoted by "Data Field." In particular, a predetermined specific field part in the preamble of the transmission signal SG21 has the signal pattern determined by the SSN denoted by "TX SSN."

Further, after the elapse of a predetermined fixed waiting time such as SIFS from completion of reception of the trigger frame TGF21, the transmission station TXP11 transmits the generated transmission signal SG21.

The transmission signal SG21 is a desired signal for the FD communication station FDP11, and is an interference signal for the reception station RXP11.

Moreover, similar to the transmission station TXP11, the FD communication station FDP11 having transmitted the trigger frame TGF21 generates a transmission signal SG22.

The transmission signal SG22 includes a preamble part denoted by "Preamble" and a data (payload) part denoted by "Data Field." In particular, a predetermined specific field part of the preamble in the transmission signal SG22 has the signal pattern determined by the SSN denoted by "FD SSN."

Furthermore, after the elapse of a predetermined fixed waiting time such as SIFS from completion of transmission of the trigger frame TGF21, the FD communication station FDP11 transmits the generated transmission signal SG22. The transmission signal SG22 is an interference signal for the FD communication station FDP11, and is a desired signal for the reception station RXP11.

Here, the waiting time that is taken until the transmission signal SG22 is transmitted is set to be equal to the waiting time that is taken until the transmission signal SG21 is transmitted. That is, the transmission signal SG21 and the transmission signal SG22 are substantially simultaneously transmitted.

Since the trigger frame TGF21 is transmitted to the transmission station TXP11, as explained above, the FD communication station FDP11 and the transmission station TXP11 can substantially simultaneously transmit transmission signals, by using the trigger frame TGF21 as a trigger.

The reception station RXP11 receives the substantially simultaneously transmitted transmission signal SG21 and transmission signal SG22, that is, a signal including the transmission signal SG21 and the transmission signal SG22.

Then, the reception station RXP11 estimates, from the preamble part of the received signal, the channel response of the link (channel) of the transmission signal SG22 which is a desired signal and the channel response of the link of the transmission signal SG21 which is an interference signal.

Here, the SSN of the transmission signal SG21 denoted by "TX SSN" and the SSN of the transmission signal SG22 denoted by "FD SSN" included in the trigger frame TGF21 are used for estimation of the channel responses.

The reception station RXP11 performs interference removal of an interference signal from the received signal, that is, cancels the interference signal on the basis of the channel responses obtained through the estimation and then, obtains the transmission signal SG22 which is a target desired signal.

As explained above, according to the present technique, an interference signal can be easily canceled with use of a trigger frame, so that the reception success rate of a desired signal, that is, the communication success rate can be improved.

<Configuration Example of FD Communication Station>

The transmission station TXP11 and the reception station RXP11 depicted in Fig. 6 are each implemented by the wireless communication device 11 depicted in Fig. 3. That is, the wireless communication device 11 functions as the transmission station TXP11 or the reception station RXP11. In this case, two antennas 21 may be provided in the wireless communication device 11.

In contrast, the FD communication station FDP11 is implemented by a wireless communication device depicted in Fig. 8.

A wireless communication device 71 depicted in Fig. 8 is a wireless communication device that functions as an FD communication station. Hereinafter, the wireless communication device 71 is particularly referred to as an FD communication station 71.

The FD communication station 71 includes a reception antenna 81, a computation section 82, an RF reception section 83, a digital signal conversion section 84, a signal reception section 85, a control section 86, a data processing section 87, a signal generation section 88, an analog signal conversion section 89, an RF transmission section 90, a transmission antenna 91, and an amplitude delay adjustment section 92.

The reception antenna 81 receives a transmission signal wirelessly transmitted, and supplies, as a reception signal, the received transmission signal to the computation section 82.

The reception signal is a signal including a transmission signal which is a desired signal transmitted from a transmission station and a transmission signal which is an interference signal transmitted from the transmission antenna 91. In other words, the desired signal which is interfering with the interference signal is received as a reception signal.

The computation section 82 subtracts a transmission signal supplied from the amplitude delay adjustment section 92, from the reception signal supplied from the reception antenna 81, thereby removes an interference signal component from the reception signal. The resultant reception signal including a desired signal component only is supplied to each of the amplitude delay adjustment section 92 and the RF reception section 83.

In the FD communication station 71, a transmission signal which is transmitted by the FD communication station 71 itself is an interference signal for a desired signal which is received by the FD communication station 71 itself. However, this interference signal is already known, so that the interference signal can be completely removed from the reception signal at the computation section 82.

The RF reception section 83 corresponds to the RF reception section 23 in Fig. 3, and includes a low noise amplifier, an AGC section, a frequency converter, a filter, or the like. The RF reception section 83 performs various processing such as amplification, gain adjustment, frequency conversion, and filtering on the reception signal supplied from the computation section 82, and supplies the resultant signal to the digital signal conversion section 84.

The digital signal conversion section 84 corresponds to the digital signal conversion section 24 in Fig. 3, and performs AD conversion on the reception signal supplied from the RF reception section 83, and supplies the resultant signal to the signal reception section 85.

The signal reception section 85 corresponds to the signal reception section 25 in Fig. 3, and performs various processing such as equalization, distortion compensation, demodulation, and decoding, on the reception signal supplied from the digital signal conversion section 84, as appropriate, under control of the control section 86, and supplies the resultant signal to the control section 86.

The control section 86 controls the overall operation of the FD communication station 71. For example, the control section 86 supplies a reception signal supplied from the signal reception section 85 to the data processing section 87, supplies data supplied from the data processing section 87 to the signal generation section 88, and further, identifies a type of a reception signal, and controls the transmission timing of a transmission signal. The control section 86 corresponds to the control section 29 in Fig. 3.

The data processing section 87 corresponds to the data processing section 30 in Fig. 3, and extracts, from the reception signal supplied from the control section 86, payload data in the reception signal, or generates payload data or the like for a transmission signal, and supplies the resultant signal to the control section 86.

The signal generation section 88 corresponds to the signal generation section 26 in Fig. 3, and generates a transmission signal in a predetermined format by performing encoding, or the like, on the basis of the data or the like, supplied from the data processing section 87 via the control section 86, and performs demodulation on a transmission signal and supplies the resultant signal to the analog signal conversion section 89.

The analog signal conversion section 89 corresponds to the analog signal conversion section 27 in Fig. 3, and performs DA conversion on the transmission signal supplied from the signal generation section 88, and supplies the resultant signal to the RF transmission section 90.

The RF transmission section 90 corresponds to the RF transmission section 28 in Fig. 3, and is configured by a frequency converter, an amplifier, a filter, or the like, for example. The RF transmission section 90 performs frequency conversion, amplification, filtering, etc., on the transmission signal supplied from the analog signal conversion section 89, and supplies the resultant signal to each of the transmission antenna 91 and the amplitude delay adjustment section 92 via a balun.

The transmission antenna 91 wirelessly transmits the transmission signal supplied from the RF transmission section 90. The amplitude delay adjustment section 92 performs amplitude adjustment and delay adjustment on a transmission signal supplied from the RF transmission section 90 on the basis of an amplitude adjustment amount and a delay amount determined by a reception signal supplied from the computation section 82, and supplies the transmission signal the amplitude of which has been adjusted by the amplitude adjustment amount and which has been delayed by the delay amount, to the computation section 82.

<FD Communication Station's Communication Process>

Next, operations of the FD communication station 71 depicted in Fig. 8 and wireless communication devices 11 which function as a transmission station and a reception station, will be explained.

First, a communication process by the FD communication station 71 will be explained with reference to a flowchart in Fig. 9.

At step S101, the control section 86 selects a transmission station and a reception station for unidirectional full duplex communication. For example, the control section 86 selects a wireless communication device 11 to function as a transmission station and a wireless communication device 11 to function as a reception station on the basis of the traffic conditions of a plurality of wireless communication devices 11 belonging to a wireless network. Thus, the transmission station TXP11 and the reception station RXP11 are selected in the example in Fig. 7, for example.

At step S102, the control section 86 determines the SSN of a transmission signal of the transmission station and the SNN of a transmission signal of the FD communication station 71 itself. Here, the SSN of a transmission signal to be transmitted from the transmission station and the SSN of a transmission signal to be transmitted from the FD communication station 71 itself are determined so as to be different values.

After the SSNs are determined, the control section 86 supplies the determined SSNs of the transmission station and the FD communication station 71 itself, a transmission device address indicating the transmission station selected at step S101, and a reception device address indicating the reception station selected at step S101, to the signal generation section 88.

At step S103, the signal generation section 88 generates a trigger frame including the SSN, the transmission device address, and the reception device address on the basis of the SSN, the transmission device address, and the reception device address which are supplied from the control section 86. Accordingly, the trigger frame TGF21 depicted in Fig. 7 is generated, for example.

The signal generation section 88 supplies the generated trigger frame to the analog signal conversion section 89. The analog signal conversion section 89 performs DA conversion on the trigger frame from the signal generation section 88, and supplies the resultant analog trigger frame obtained by the DC conversion to the RF transmission section 90.

At step S104, the RF transmission section 90 transmits the trigger frame supplied from the analog signal conversion section 89.

That is, for example, the RF transmission section 90 performs frequency conversion, amplification, filtering, etc., on the trigger frame, as appropriate, and then, outputs the trigger frame to the transmission antenna 91 so that the trigger frame is transmitted.

At step S105, the signal generation section 88 generates a preamble on the basis of the SSN of a transmission signal of the FD communication station 71 itself.

That is, the control section 86 supplies the SSN of a transmission signal of the FD communication station 71 itself determined at step S102 and payload data, etc., to the signal generation section 88, thereby instructs the signal generation section 88 to generate a transmission signal. In accordance with the instruction from the control section 86, the signal generation section 88 generates a preamble including a field having the signal pattern indicated by the SSN supplied from the control section 86.

At step S106, the signal generation section 88 generates a transmission signal having the preamble generated at step S105 and having, as payload, the data supplied from the control section 86.

At step S107, the transmission antenna 91 transmits the transmission signal at a timing determined by the trigger frame.

For example, after the elapse of a predetermined time such as SIFS from the end of transmission of the trigger frame at step S104, the control section 86 instructs the signal generation section 88 to transmit the transmission signal. Then, in accordance with the instruction from the control section 86, the signal generation section 88 performs modulation or the like on the transmission signal generated at step S106, as appropriate, and supplies the resultant signal to the analog signal conversion section 89.

The analog signal conversion section 89 performs DA conversion on the transmission signal supplied from the signal generation section 88, and supplies the resultant signal to the RF transmission section 90.

The RF transmission section 90 performs frequency conversion or the like on the transmission signal supplied from the analog signal conversion section 89, as appropriate, and supplies the resultant signal to the transmission antenna 91 such that the transmission signal is wirelessly transmitted.

Moreover, the RF transmission section 90 also supplies the transmission signal to the amplitude delay adjustment section 92. The amplitude delay adjustment section 92 performs amplitude adjustment and delay adjustment on the transmission signal supplied from the RF transmission section 90 on the basis of the reception signal supplied from the computation section 82, and supplies the adjusted transmission signal to the computation section 82.

As explained above, by transmission of a transmission signal at a timing determined by a trigger frame, transmission signals are transmitted at substantially the same timing from the FD communication station 71 and the transmission station. For example, in the example in Fig. 7, the transmission signal SG21 and the transmission signal SG22 are simultaneously transmitted.

At step S108, the reception antenna 81 receives, as a reception signal, the transmission signal transmitted from the transmission station, and supplies the reception signal to the computation section 82. This reception signal includes not only a transmission signal which has been transmitted from the transmission station and is a desired signal but also the transmission signal which has been transmitted from the transmission antenna 91 at step S107 and is an interference signal.

The computation section 82 removes the interference signal by subtracting the transmission signal supplied from the amplitude delay adjustment section 92, from the reception signal supplied from the reception antenna 81, and supplies the resultant reception signal including a desired signal component only to each of the amplitude delay adjustment section 92 and the RF reception section 83.

The RF reception section 83 performs various processing such as amplification on the reception signal supplied from the computation section 82, as appropriate, and supplies the resultant signal to the digital signal conversion section 84. The digital signal conversion section 84 performs AD conversion on the reception signal supplied from the RF reception section 83, and supplies the resultant signal to the signal reception section 85. The signal reception section 85 performs various processing such as equalization on the reception signal supplied from the digital signal conversion section 84, as appropriate, and supplies the resultant signal to the control section 86.

For example, in the example in Fig. 7, the transmission signal SG21 and the transmission signal SG22 are simultaneously received. Then, at the computation section 82, the transmission signal SG22 which is an interference signal is removed from a reception signal including the transmission signal SG21 and the transmission signal SG22, so that the transmission signal SG21 which is a desired signal is obtained.

When a transmission signal transmitted from a transmission station is received as a reception signal, the FD communication station 71's communication process is ended.

As explained above, the FD communication station 71 generates and transmits a trigger frame including SSNs, a transmission device address, and a reception device address, and further, transmits a transmission signal corresponding to the SSN of the FD communication station 71 itself and receives a reception signal. Here, the transmission signal including a signal pattern determined by the SSN in the trigger frame is generated.

Accordingly, only by execution of generation and transmission of a trigger frame, a transmission signal of the FD communication station 71 and a transmission signal of a transmission station substantially simultaneously arrive at the reception station, and further, the reception station can highly accurately perform channel estimation by using the SSNs in the trigger frame. As a result, the communication success rate can be more easily improved.

<Transmission Station's Communication Process>

In a case where the communication process having been explained with reference to Fig. 9 is executed by the FD communication station 71, a wireless communication device 11 selected as a transmission station executes a process in Fig. 10.

Hereinafter, with reference to a flowchart in Fig. 10, an explanation will be given of a transmission station's communication process which is executed when the wireless communication having been explained with reference to Fig. 7 is performed by a wireless communication device 11 which is a transmission station. Note that step S131 is similar to step S51 in Fig. 5, and thus, an explanation thereof is omitted.

After step S131 is executed, various pieces of information including a transmission device address, a reception device address, and an SSN read from a trigger frame is supplied from the data processing section 30 to the control section 29.

At step S132, the control section 29 specifies the reception station, the transmission station, the SSN of a transmission signal of the transmission station, on the basis of the transmission device address, the reception device address, and the SSN obtained from the trigger frame.

In this case, the wireless communication device 11 grasps, from the result of specification of the transmission station, that the wireless communication device 11 itself is a transmission station. After the wireless communication device 11 grasps that the wireless communication device 11 itself is a transmission station, steps S133 to S135 are executed, and the transmission station's communication process is ended. However, these steps are similar to steps S59 to S61 in Fig. 5, and thus, an explanation thereof is omitted.

Note that, at step S135, the transmission signal is transmitted at substantially the same timing as that of the transmission signal transmitted at step S107 in Fig. 9.

As explained above, the wireless communication device 11 functioning as a transmission station, receives a trigger frame including an SSN, a transmission device address, and a reception device address, specifies that the wireless communication device 11 itself is a transmission station, and transmits a transmission signal in accordance with the specification result. Here, the transmission signal including a signal pattern determined by an SSN in the trigger frame is generated.

Accordingly, only by reception of a trigger frame and extraction of information such as a transmission device address therefrom, a transmission signal of the FD communication station 71 and a transmission signal of a transmission station can substantially simultaneously arrive at a reception station, and further, the reception station can highly accurately perform channel estimation. As a result, the communication success rate can be more easily improved.

<Reception Station's Communication Process>

In a case where the communication process having been explained with reference to Fig. 9 is executed by the FD communication station 71, a wireless communication device 11 selected as a reception station performs a process in Fig. 11.

Hereinafter, with reference to a flowchart in Fig. 11, an explanation will be given of a reception station's communication process which is executed when the wireless communication having been explained with reference to Fig. 7 is performed by a wireless communication device 11 which is a reception station. Note that steps S161 and S162 are similar to steps S131 and S132 in Fig. 10, and thus, an explanation thereof is omitted.

In this case, after step S162 is executed, the wireless communication device 11 has grasped, from the result of specification of a reception station, that the wireless communication device 11 itself is a reception station, and thus, prepares for reception of a transmission signal from the FD communication station 71, and waits until a transmission signal is transmitted.

At step S163, the antennas 21 receive respective signals transmitted from the transmission station and the FD communication station 71.

That is, a process similar to step S55 in Fig. 5 is executed at step S163, and one signal including a transmission signal transmitted from a transmission station and a substantially simultaneously transmitted transmission signal from the FD communication station 71 is received as a reception signal.

In this case, the transmission signal transmitted from the FD communication station 71 at step S107 in Fig. 9 is a desired signal for the wireless communication device 11 which is a reception station, and the transmission signal transmitted from the transmission station at step S135 in Fig. 10 is an interference signal that interferes with the desired signal.

For example, in the example in Fig. 7, the transmission signal SG21 which is an interference signal and the transmission signal SG22 which is a desired signal are simultaneously received.

After reception of the reception signal in this manner, steps S164 and S165 are then executed, and the reception station's communication process is ended. These steps are similar to steps S56 and S57 in Fig. 5, and thus, an explanation thereof is omitted.

As explained above, a wireless communication device 11 functioning as a reception station receives a trigger frame including an SSN, a transmission device address, and a reception device address, specifies that the wireless communication device 11 itself is a reception station, and receives a reception signal in accordance with the specification result. Here, channel estimation is performed with use of a signal pattern determined by an SSN in the trigger frame, so that an interference signal is removed from the reception signal.

Accordingly, only by reception of a trigger frame and extraction of information such as a transmission device address, a transmission signal of the FD communication station 71 and a transmission signal of a transmission station can be substantially simultaneously received, and channel estimation can be highly accurately performed, so that the communication success rate can be more easily improved.

As explained above, when the present technique is applied to a wireless network which performs unidirectional full duplex communication, an interference signal included in a reception signal is canceled with use of a multi-antenna including a plurality of the antennas 21 or the like, so that the communication success rate can be improved. That is, unidirectional full duplex communication is more efficiently performed, so that an effect provided by the unidirectional full duplex communication can be improved.

<Channel Estimation and Interference Removal>

Here, channel estimation and interference removal which are performed in the aforementioned first and second embodiments, will be explained in more detail. Note that the same channel estimation operation and the same interference removal operation are performed in communication using spatial reuse and unidirectional full duplex communication.

In communication using spatial reuse, a transmission signal transmitted from an access point or a station in a BSS to which a reception station belongs, that is, a transmission station in the BSS to which the reception station belongs, is a desired signal for the reception station, and a transmission signal transmitted from a transmission station in a BSS to which the reception station does not belong, that is, in an OBSS is an interference signal for the reception station.

In contrast, in unidirectional full duplex communication, a transmission signal from an FD communication station is a desired signal for a reception station, and a transmission signal from a transmission station is an interference signal for the reception station.

As explained above, the signal pattern of a partial section (field) of a preamble in each transmission signal is determined with respect to an SSN included in a trigger frame. Here, in a case where a field having a signal pattern determined by an SSN is HELTF (High Efficiency Long Training Field), the transmission signal thereof has a configuration depicted in Fig. 12, for example.

In the example in Fig. 12, one transmission signal is depicted in a part indicated by an arrow Q11, and another transmission signal is depicted in a part indicated by an arrow Q12. During communication using spatial reuse or unidirectional full duplex communication, the two transmission signals are simultaneously transmitted.

For example, the transmission signal indicted by the arrow Q11 represents a transmission signal the SSN of which has a value of 0 in the trigger frame, and the transmission signal indicated by the arrow Q12 represents a transmission signal the SSN of which has a value of 1 in the trigger frame.

Note that, hereinafter, the explanation will be continued on the assumption that the transmission signal indicated by the arrow Q11 is a desired signal for a certain reception station, and the transmission signal indicated by the arrow Q12 is an interference signal for the reception station. In addition, hereinafter, the transmission signal indicated by the arrow Q11 is also referred to as desired signal, and the transmission signal indicated by the arrow Q12 is also referred to as interference signal.

In the desired signal, a section T1 part is a preamble. A part following the preamble and being denoted by "Data Field" is a data field in which payload data is stored.

Moreover, in the desired signal, a legacy preamble denoted by "Legacy Preamble" is disposed in the head part of the preamble. The legacy preamble is used for synchronization in time or frequency.

RL-SIG denoted by "RL-SIG" is disposed to follow the legacy preamble in the preamble of the desired signal. HE-SIG-A denoted by "HE-SIG-A" is disposed next to the RL-SIG.

Further, HE-STF (High Efficiency-Short Training Field) denoted by "HE-STF" is disposed next to the HE-SIG-A. Next to the HE-STF, two HELTFs denoted by "HELTF" are disposed side by side.

RL-SIG is signaling information in which rate information and length information regarding the data part is written. HE-SIG-A is signaling information in which information for allowing application of a spatial reuse technology is stored as an A field of a signal in a high-density system.

HE-STF is a short training field in a high-density system, and is used for adjustment of physical layer parameters or synchronization which is necessary for achieving a high density. HELTF is a long training field in the high-density system.

Here, in the desired signal, the first HELTF is disposed in a section t1, and the second HELTF is disposed in a section t2 following the first HELTF.

In general, the signal pattern of HELTF, that is, values (a series of values) which are written in HELTF are set to fixed values having a predetermined signal pattern.

However, according to the present technique, the signal pattern of HELTF disposed in a section t1 and the signal pattern of HELTF disposed in a section t2 are previously determined with respect to an SSN of each transmission signal designated by a trigger frame.

Here, for example, in a desired signal the SSN of which has a value of 0, both HELTF disposed in the section t1 and HELTF disposed in the section t2 are set to have a signal pattern (values) the same as that of a common HELTF. In particular, in the desired signal, HELTF disposed in the section t1 is the same as HELTF disposed in the section t2.

Meanwhile, a preamble in an interference signal basically has the same configuration as that of the preamble in the desired signal. That is, a legacy preamble, RL-SIG, HE-SIG-A, HE-STF, and two successive HELTF are disposed in order from the top of the preamble in the interference signal. In addition, the preamble is followed by a data field which is denoted by "Data Field" and in which payload data is stored.

However, in the interference signal, the signal pattern of HELTF disposed in the section t1 and the signal pattern of HELTF disposed in the section t2 are signal patterns determined with respect to the value of the SSN of the interference signal. Thus, these signal patterns of HELTF disposed in the section t1 and the section t2 are set to be different from those in the desired signal.

In this example, the signal pattern of HELTF disposed in the section t1 in the interference signal is the same as the signal pattern of HELTF disposed in the section t1 in the desired signal.

In contrast, as denoted by "-1*HELTF," the signal pattern of HELTF disposed in the section t2 in the interference signal is different from the signal pattern of HELTF disposed in the section t2 in the desired signal.

Specifically, the signal pattern of HELTF disposed in the section t2 in the interference signal, that is, the signal value has a sign different from that of the signal pattern (signal value) of HELTF disposed in the section t2 in the desired signal. That is, HELTF disposed in the section t2 in the interference signal has a value obtained by multiplying the value of HELTF disposed in the section t2 in the desired signal by "-1."

Thus, the signal patterns of HELTFs are changed according to respective SSNs determined for transmission signals such that the HELTF parts of the transmission signals are substantially simultaneously received. Accordingly, the channel responses of channels of the transmission signals can be highly accurately obtained. That is, reliable channel responses can be obtained.

For example, in a case where two transmission signals are simultaneously transmitted as depicted in Fig. 12, it is sufficient that at least two antennas are provided to a reception station, as depicted in Fig. 13.

In Fig. 13, a reception station RXP21 that receives transmission signals, a transmission station TXP21 that transmits a transmission signal which is a desired signal, and an interference station TXP22 that transmits a transmission signal which is an interference signal, belong to a wireless network.

For example, if the reception station RXP21 is assumed to correspond to the wireless communication device STA1 in the example depicted in Fig. 1, the transmission station TXP21 and the interference station TXP22 correspond to the wireless communication device AP1 and the wireless communication device STA2 in Fig. 1, respectively. Similarly, if the reception station RXP21 is assumed to correspond to the reception station RXP11 in the example depicted in Fig. 6, for example, the transmission station TXP21 and the interference station TXP22 correspond to the FD communication station FDP11 and the transmission station TXP11 in Fig. 6, respectively.

Also, the reception station RXP21 has two antennas AN1 and AN2 corresponding to the antennas 21 depicted in Fig. 3, and receives transmission signals through the antennas AN1 and AN2.

Accordingly, four links (channels) exist among the reception station RXP21, the transmission station TXP21, and the interference station TXP22.

That is, a channel indicated by an arrow RT1 from the transmission station TXP21 to the antenna AN1, and a channel denoted by an arrow RT2 from the transmission station TXP21 to the antenna AN2 exist between the reception station RXP21 and the transmission station TXP21. Hereinafter, a channel response of the channel indicated by the arrow RT1 is also referred to as $h_{11}$, and a channel response of the channel indicated by the arrow RT2 is also referred to as $h_{12}$.

Also, a channel indicated by an arrow RT3 from the interference station TXP22 to the antenna AN1 and a channel indicated by an arrow RT4 from the interference station TXP22 to the antenna AN2 exit between the reception station RXP21 and the interference station TXP22. Hereinafter, the channel response of the channel indicated by the arrow RT3 is also referred to as $h_{21}$, and the channel response of the channel indicated by the arrow RT4 is also referred to as $h_{22}$.

Here, it is assumed that a desired signal indicated by the arrow Q11 in Fig. 12 is transmitted from the transmission station TXP21, and an interference signal indicated by the arrow Q12 in Fig. 12 is transmitted from the interference station TXP22 substantially simultaneously with the transmission of the desired signal.

In this case, the desired signal transmitted from the transmission station TXP21 passes through the channel (route) indicated by the arrow RT1 and is received by the antenna AN1, and further, passes through the channel (route) indicated by the arrow RT2 and is received by the antenna AN2. Similarly, the interference signal transmitted from the interference station TXP22 passes through the channel (route) indicated by the arrow RT3 and is received by the antenna AN1, and further, passes through the channel (route) indicated by the arrow RT4 and is received by the antenna AN2.

Here, at the reception station RXP21, synchronization in time and frequency between the legacy preamble and HE-STF in the desired signal and the legacy preamble and HE-STF in the interference signal can be achieved. Accordingly, the desired signal and the interference signal can be assumed to be synchronized with each other in the time direction. That is, the section t1 part of the desired signal and the section t1 part of the interference signal can be assumed to be simultaneously received.

Thus, for example, an arrival signal $y_{1,t1}$ received by the antenna AN1 when the respective section t1 parts of the desired signal and the interference signal arrive at the antenna AN1, and an arrival signal $y_{2,t1}$ received by the antenna AN2 when the respective section t1 parts of the desired signal and the interference signal arrive at the antenna AN2 can be expressed by the following expression (1).

[Math. 1]

$$y_{1,t1} = h_{11}HELTF + h_{21}HELTF$$
$$\cdots (1)$$
$$y_{2,t1} = h_{12}HELTF + h_{22}HELTF$$

In the expression (1), "HELTF" represents the value of the section t1 part of the desired signal or the interference signal. Since the section t1 part of the desired signal and the section t1 part of the interference signal are long training fields (HELTF) having the same value "HELTF," the sum of HELTF multiplied by the channel response $h_{11}$ and HELTF multiplied by the channel response $h_{21}$ becomes the arrival signal $y_{1,t1}$ received by the antenna AN1. Similarly, the sum of HELTF multiplied by the channel response $h_{12}$ and HELTF multiplied by the channel response $h_{22}$ becomes the arrival signal $y_{2,t1}$ received by the antenna AN2.

Note that, in order to keep the generality, the case of Flat Fading is considered. In a frequency-selective environment, the above expression (1) expresses one subcarrier.

Similar to the arrival signal $y_{1,t1}$ and the arrival signal $y_{2,t1}$, an arrival signal $y_{1,t2}$ received by the antenna AN1 when the respective section t2 parts of the desired signal and the interference signal arrive at the antenna AN1, and an arrival signal $y_{2,t2}$ received by the antenna AN2 when the respective section t2 parts of the desired signal and the interference signal arrive at the antenna AN2 can be expressed by the following expression (2) .

[Math. 2]

$$y_{1,t2} = h_{11}HELTF - h_{21}HELTF$$
$$\cdots (2)$$
$$y_{2,t2} = h_{12}HELTF - h_{22}HELTF$$

In the expression (2), "HELTF" represents the value (absolute value) of the section t2 part of the desired signal or the interference signal. When the value of the section t2 part of the desired signal is HELTF, the value of the section t2 part of the interference signal is different, only in signs, from the value of the section t2 part of the desired signal, and thus, the value of the section t2 part of the interference signal is -HELTF.

Therefore, the difference between HELTF multiplied by the channel response $h_{11}$ and HELTF multiplied by the channel response $h_{21}$ becomes the arrival signal $y_{1,t2}$ received by the antenna AN1. Similarly, the difference between HELTF multiplied by the channel response $h_{12}$ and HELTF multiplied by the channel response $h_{22}$ becomes the arrival signal $y_{2,t2}$ received by the antenna AN2.

From the expressions (1) and (2), a channel response $h'_{11}$, a channel response $h'_{21}$, a channel response $h'_{12}$, and a channel response $h'_{22}$ which are estimated values of the channel response $h_{11}$, the channel response $h_{21}$, the channel response $h_{12}$, and the channel response $h_{22}$ of respective channels, can be obtained by calculation of the following expression (3).

[Math. 3]

$$h'_{11} = \frac{y_{1,t1} + y_{1,t2}}{2HELTF} \qquad h'_{21} = \frac{y_{2,t1} - y_{2,t2}}{2HELTF}$$

$$h'_{12} = \frac{y_{1,t1} + y_{1,t2}}{2HELTF} \qquad h'_{22} = \frac{y_{2,t1} - y_{2,t2}}{2HELTF} \qquad \cdots (3)$$

According to the present technique, different SSNs are designated for respective transmission signals, transmission signals each including a preamble including a training field, that is, HELTF having a signal pattern according to the corresponding SSN, are generated. Therefore, as a result of calculation of the expression (3), the channel responses of respective channels can be highly accurately obtained.

When the channel responses h'$_{11}$ to h'$_{22}$ of the channels (links) obtained by the expression (3) can be expressed by one matrix H which is given by the following expression (4).

[Math. 4]

$$H = \begin{bmatrix} h'_{11} & h'_{21} \\ h'_{12} & h'_{22} \end{bmatrix} \quad \cdots (4)$$

As seen from the expressions (1) to (4), the channel matrix H can be obtained from the reception signals received by the antennas, and the SSNs in the trigger frame.

Further, a 1-row × 2-column matrix that can be obtained from the channel matrix H is defined as H$_{IC}$, a reception signal (arrival signal) received by a predetermined antenna of a reception station is defined as y$_1$, and a reception signal (arrival signal) received by another antenna different from the predetermined antenna of the reception station is defined as y$_2$.

In this case, when a signal obtained by removing an interference signal through interference removal from a reception signal received by the reception station is defined as a reception signal y$_{rx}$, the reception signal y$_{rx}$ can be obtained by calculation of the following expression (5). That is, when calculation for obtaining the product of the matrix H$_{IC}$ and a vector formed by reception signals received by the antennas is conducted as interference removal, the reception signal Y$_{rx}$ corresponding to the desired signal can be obtained.

[Math. 5]

$$y_{rx} = H_{IC} \begin{bmatrix} y_1 \\ y_2 \end{bmatrix} \quad \cdots (5)$$

Note that the matrix H$_{IC}$ can be obtained by the following expression (6).

[Math. 6]

$$H_{IC} = H^\xi [1 \quad 0] \quad \cdots (6)$$

Further, the matrix H$^\xi$ in the expression (6) represents the inverse matrix of the channel matrix H, in a broad sense.

For example, in a case where the matrix H$^\xi$ is obtained by Zero Forcing, the matrix H$^\xi$ can be obtained by calculation of the following expression (7). Note that, in the expression (7), a matrix H$^H$ represents the Hermitian matrix of the channel matrix H.

[Math. 7]

$$H^\xi = (H^H H)^{-1} H^H \quad \cdots (7)$$

In contrast, in a case where the matrix H$^\xi$ is obtained by MMSE (Minimum Mean Square Error), for example, the matrix H$^\xi$ can be obtained by calculation of the following expression (8).

[Math. 8]

$$H^\xi = (H^H H + \delta I)^{-1} H^H \quad \cdots (8)$$

Note that, in expression (8), the matrix I represents a unit matrix, and δ represents a reception SNR (Signal Noise Retio). δ representing the reception SNR can be obtained from the legacy preamble in a reception signal or the like.

As explained above, as a result of calculation of the expression (5) as interference removal, an interference signal can be removed from a reception signal and only a desired signal can be extracted.

Note that, in a case where there are two reception stations and the matrix $H_{IC}$ can be obtained by calculation of expression (6) at one of the reception stations, the other reception station conducts calculation by substituting a vector [01] for the vector [10] in the expression (6), so that the matrix $H_{IC}$ for obtaining a correct desired signal can be obtained at the other reception station.

For example, in the aforementioned first embodiment, the channel estimation section 41 conducts calculation of the expression (3) as the channel estimation at step S17 in Fig. 4 or step S56 in Fig. 5, thereby calculates the channel responses $h'_{11}$ to $h'_{22}$ of respective channels.

Further, the signal processing section 42 obtains the matrix $H_{IC}$ through the expression (6) by using the channel responses $h'_{11}$ to $h'_{22}$ at step S18 in Fig. 4 or step S57 in Fig. 5. Further, the signal processing section 42 obtains the reception signal $y_{rx}$ which is a desired signal by conducting calculation of the expression (5) from the matrix $H_{IC}$ and reception signals received by the antennas 21.

In contrast, in the aforementioned second embodiment, the channel estimation section 41 conducts calculation of the expression (3) as the channel estimation at step S164 in Fig. 11, thereby calculates the channel responses $h'_{11}$ to $h'_{22}$ of respective channels.

Further, the signal processing section 42 obtains the matrix $H_{IC}$ through the expression (6) by using the channel responses $h'_{11}$ to $h'_{22}$ at step S165 in Fig. 11, and obtains the reception signal $y_{rx}$ which is a desired signal by conducting calculation of the expression (5) from the matrix $H_{IC}$ and reception signals received at the antennas 21.

According to the present technique, in order to obtain channel responses by calculation of the expression (3) at a reception station side, signaling of the signal pattern of HELTF (long training field) in each transmission signal needs to be performed with respect to the reception station. To this end, SSNs stored in a trigger frame are used.

Further, in order to obtain channel responses by the expression (3), the arrival timings of transmission signals at a reception station need to be synchronized with one another. To this end, the timing of completion of transmission/reception of a trigger frame and a transmission device address stored in a trigger frame are used.

Note that the example in which the signal pattern of HELTF in a preamble of a transmission signal is designated by an SSN has been explained above. However, examples of a field the signal pattern of which is designated by an SSN is not limited to HELTF, the signal pattern may be designated in any field. However, since, prior to reception of a payload, channel estimation is preferably performed in implementation, a field the signal pattern of which is designated by an SSN is preferably a field in a preamble.

In addition, not the whole of a specific field such as HELTF but only a partial section of the specific field may be used for channel estimation.

<Configuration Example of Computer>

A series of the aforementioned processes can be executed by hardware or software. In a case where the series of processes are executed by software, a program constituting the software is installed in a computer. Examples of the computer include a computer incorporated in a dedicated hardware, and a general personal computer capable of executing various functions by installing various programs thereinto.

Fig. 14 is a block diagram depicting a hardware configuration example of a computer that executes the aforementioned series of processes by using a program.

In the computer, a CPU (Central Processing Unit) 501, a ROM (Read Only Memory) 502, and a RAM (Random Access Memory) 503 are mutually connected via a bus 504.

Further, an input/output interface 505 is connected to the bus 504. An input section 506, an output section 507, a recording section 508, a communication section 509, and a drive 510 are connected to the input/output interface 505.

The input section 506 includes a keyboard, a mouse, a microphone, an imaging element, an antenna, or the like. The output section 507 includes a display, a loudspeaker, an antenna, or the like. The recording section 508 includes a hard disk, a nonvolatile memory, or the like. The communication section 509 includes a network interface or the like. The drive 510 drives a removal recording medium 511 such as a magnetic disk, an optical disk, a magneto-optical disk, a semiconductor memory, or the like.

In the computer having the above configuration, for example, the CPU 501 loads a program recorded in the recording section 508, into the RAM 503 via the input/output interface 505 and the bus 504, and executes the program, whereby the above series of processes is executed.

The program which is executed by the computer (CPU 501) can be provided by being recorded in the removal recording medium 511 such as a package medium. Alternatively, the program can be provided via a wired or wireless transmission medium such as a local area network, the internet, digital satellite broadcasting.

In the computer, through attachment of the removal recording medium 511 to the drive 510, the program can be installed into the recording section 508 via the input/output interface 505. In addition, the program can be received by the communication section 509 via a wired or wireless transmission medium, and can be installed into the recording section 508. Alternatively, the program may be previously installed in the ROM 502 or the recording section 508.

Note that the program which the computer executes may a program for executing the processes in the time-series order explained herein, or may be a program for executing the processes at necessary timings such as a timing when a call is made.

Moreover, the embodiments of the present technique are not limited to the aforementioned ones, and various changes can be made within the scope of the gist of the present technique.

For example, the present technique may be configured by cloud computing in which processing is executed with one function allocated to and shared by a plurality of devices.

In addition, the steps having been explained in the aforementioned flowcharts may be executed by one device, or may be allocated to and executed by a plurality of devices.

Furthermore, in a case where a plurality of processes is included in one step, the plurality of processes included in the one step may be executed by one device, or may be allocated to and executed by a plurality of devices.

Furthermore, the present technique may have the following configurations.

(1) A wireless communication device including:

a channel estimation section that performs channel estimation on the basis of designation information for designating a signal pattern of a predetermined section in each of a plurality of transmission signals and arrival signals which are received by a plurality of antennas and which include the plurality of transmission signals having been substantially simultaneously transmitted; and
a signal processing section that performs interference removal on the arrival signals on the basis of a result of the channel estimation.

(2) The wireless communication device according to (1), in which
the section includes a section in a preamble of each of the transmission signals.
(3) The wireless communication device according to (2), in which
the section includes a training field in the preamble.
(4) The wireless communication device according to any one of (1) to (3), in which
different signal patterns are designated for the plurality of respective transmission signals by the designation information.
(5) The wireless communication device according to any one of (1) to (4), further including:
a reception section that receives, through the antennas, a trigger frame including the designation information.
(6) The wireless communication device according to any one of (1) to (4), further including:
a signal generation section that generates a trigger frame including the designation information; and
a transmission section that transmits the trigger frame through the antennas.
(7) The wireless communication device according to (5) or (6), in which
the trigger frame further includes information indicating a wireless communication device to transmit the transmission signal.
(8) The wireless communication device according to any one of (5) to (7), in which
the trigger frame further includes information indicating a wireless communication device to receive the transmission signal.
(9) A wireless communication method including:

by a wireless communication device
performing channel estimation on the basis of designation information for designating a signal pattern of a predetermined section in each of a plurality of transmission signals and arrival signals which are received by a plurality of antennas and which include the plurality of transmission signals having been substantially simultaneously transmitted; and
performing interference removal on the arrival signals on the basis of a result of the channel estimation.

(10) A program for causing a computer to execute processing including:

a step of performing channel estimation on the basis of designation information for designating a signal pattern of a predetermined section in each of a plurality of transmission signals and arrival signals which are received by a plurality of antennas and which include the plurality of transmission signals having been substantially simultaneously transmitted; and
a step of performing interference removal on the arrival signals on the basis of a result of the channel estimation.

(11) A wireless communication device including:

a signal generation section that generates, on the basis of designation information which is included in a trigger frame and which designates a signal pattern of a predetermined section in a transmission signal, the transmission signal which includes the section having the signal pattern designated by the designation information; and
a transmission section that transmits the transmission signal at a timing determined by the trigger frame.

(12) The wireless communication device according to (11), in which
the section includes a section in a preamble of the transmission signal.
(13) The wireless communication device according to (12), in which
the section includes a training field in the preamble.
(14) The wireless communication device according to any one of (11) to (13), in which
the trigger frame includes the designation information for each of a plurality of the transmission signals to be substantially simultaneously transmitted.
(15) The wireless communication device according to (14), in which
different signal patterns are designated for the plurality of respective transmission signals by the designation information.
(16) The wireless communication device according to any one of (11) to (15), further including:
a reception section that receives the trigger frame.
(17) The wireless communication device according to any one of (11) to (15), in which
the signal generation section generates the trigger frame, and
the transmission section transmits the trigger frame.
(18) The wireless communication device according to any one of (11) to (17), in which
the trigger frame further includes information indicating a wireless communication device to transmit the transmission signal.
(19) A wireless communication method including:

by a wireless communication device,
generating, on the basis of designation information which is included in a trigger frame and which designates a signal pattern of a predetermined section in a transmission signal, the transmission signal which includes the section having the signal pattern designated by the designation information; and
transmitting the transmission signal at a timing determined by the trigger frame.

(20) A program for causing a computer to execute processing including:

a step of generating, on the basis of designation information which is included in a trigger frame and which designates a signal pattern of a predetermined section in a transmission signal, the transmission signal which includes the section having the signal pattern designated by the designation information; and
a step of transmitting the transmission signal at a timing determined by the trigger frame.

[Reference Signs List]

11 Wireless communication device, 21-1 to 21-n, 21 Antenna, 23-1 to 23-n, 23 RF reception section, 25 Signal reception section, 26 Signal generation section, 28-1 to 28-n, 28 RF transmission section, 29 Control section, 41 Channel estimation section, 42 Signal processing section, 71 FD communication station, 86 Control section, 88 Signal generation section, 90 RF transmission section, 91 Transmission antenna

**Claims**

1. A wireless communication device comprising:

a channel estimation section that performs channel estimation on a basis of designation information for designating a signal pattern of a predetermined section in each of a plurality of transmission signals and arrival signals which are received by a plurality of antennas and which include the plurality of transmission signals having been substantially simultaneously transmitted; and
a signal processing section that performs interference removal on the arrival signals on a basis of a result of the channel estimation.

2. The wireless communication device according to claim 1, wherein

the section includes a section in a preamble of each of the transmission signals.

3. The wireless communication device according to claim 2, wherein
the section includes a training field in the preamble.

4. The wireless communication device according to claim 1, wherein
different signal patterns are designated for the plurality of respective transmission signals by the designation information.

5. The wireless communication device according to claim 1, further comprising:
a reception section that receives, through the antennas, a trigger frame including the designation information.

6. The wireless communication device according to claim 1, further comprising:

a signal generation section that generates a trigger frame including the designation information; and
a transmission section that transmits the trigger frame through the antennas.

7. The wireless communication device according to claim 5, wherein
the trigger frame further includes information indicating a wireless communication device to transmit the transmission signal.

8. The wireless communication device according to claim 5, wherein
the trigger frame further includes information indicating a wireless communication device to receive the transmission signal.

9. A wireless communication method comprising:

by a wireless communication device
performing channel estimation on a basis of designation information for designating a signal pattern of a predetermined section in each of a plurality of transmission signals and arrival signals which are received by a plurality of antennas and which include the plurality of transmission signals having been substantially simultaneously transmitted; and
performing interference removal on the arrival signals on a basis of a result of the channel estimation.

10. A program for causing a computer to execute processing including:

a step of performing channel estimation on a basis of designation information for designating a signal pattern of a predetermined section in each of a plurality of transmission signals and arrival signals which are received by a plurality of antennas and which include the plurality of transmission signals having been substantially simultaneously transmitted; and
a step of performing interference removal on the arrival signals on a basis of a result of the channel estimation.

11. A wireless communication device comprising:

a signal generation section that generates, on a basis of designation information which is included in a trigger frame and which designates a signal pattern of a predetermined section in a transmission signal, the transmission signal which includes the section having the signal pattern designated by the designation information; and
a transmission section that transmits the transmission signal at a timing determined by the trigger frame.

12. The wireless communication device according to claim 11, wherein
the section includes a section in a preamble of the transmission signal.

13. The wireless communication device according to claim 12, wherein
the section includes a training field in the preamble.

14. The wireless communication device according to claim 11, wherein
the trigger frame includes the designation information for each of a plurality of the transmission signals to be substantially simultaneously transmitted.

**15.** The wireless communication device according to claim 14, wherein
different signal patterns are designated for the plurality of respective transmission signals by the designation information.

**16.** The wireless communication device according to claim 11, further comprising:
a reception section that receives the trigger frame.

**17.** The wireless communication device according to claim 11, wherein
the signal generation section generates the trigger frame, and
the transmission section transmits the trigger frame.

**18.** The wireless communication device according to claim 11, wherein
the trigger frame further includes information indicating a wireless communication device to transmit the transmission signal.

**19.** A wireless communication method comprising:

by a wireless communication device,
generating, on a basis of designation information which is included in a trigger frame and which designates a signal pattern of a predetermined section in a transmission signal, the transmission signal which includes the section having the signal pattern designated by the designation information; and
transmitting the transmission signal at a timing determined by the trigger frame.

**20.** A program for causing a computer to execute processing including:

a step of generating, on a basis of designation information which is included in a trigger frame and which designates a signal pattern of a predetermined section in a transmission signal, the transmission signal which includes the section having the signal pattern designated by the designation information; and
a step of transmitting the transmission signal at a timing determined by the trigger frame.

# FIG.1

# FIG.2

| TX1 Addr. | TX2 Addr. | RX1 Addr. | RX2 Addr. | TX1 SSN | TX2 SSN |
|-----------|-----------|-----------|-----------|---------|---------|

Preamble    Data Field

AP1    TGF11    Trigger    SIFS    Preamble    Data Field    SG12

AP2    Trigger    TGF11    CANCEL    Rx

STA1    Rx    Rx    CANCEL

STA2    Rx    SIFS    Preamble    Data Field    SG11

EP 3 678 300 A1

FIG.3

EP 3 678 300 A1

EP 3 678 300 A1

# F I G . 4

```
        ┌─────────────────────────┐
        │   START ACCESS POINT'S   │
        │   COMMUNICATION PROCESS  │
        └─────────────────────────┘
                     │
                     ▼
        ┌─────────────────────────┐
        │ SELECT TRANSMISSION      │ S11
        │ STATION AND RECEPTION    │
        │ STATION FOR SPATIAL      │
        │ REUSE TIME               │
        └─────────────────────────┘
                     │
                     ▼
        ┌─────────────────────────┐
        │ DETERMINE SNN OF         │ S12
        │ TRANSMISSION SIGNAL      │
        └─────────────────────────┘
                     │
                     ▼
        ┌─────────────────────────┐
        │ GENERATE TRIGGER FRAME   │ S13
        └─────────────────────────┘
                     │
                     ▼
        ┌─────────────────────────┐
        │ TRANSMIT TRIGGER FRAME   │ S14
        └─────────────────────────┘
```

S15 — IS WIRELESS COMMUNICATION DEVICE ITSELF TRANSMISSION STATION?

YES:

GENERATE PREAMBLE ON BASIS OF SSN OF WIRELESS COMMUNICATION DEVICE ITSELF — S19

GENERATE TRANSMISSION SIGNAL — S20

TRANSMIT TRANSMISSION SIGNAL AT TIMING DETERMINED BY TRIGGER FRAME — S21

NO:

RECEIVE SIGNAL TRANSMITTED FROM TRANSMISSION STATION — S16

REQUEST CHANNEL RESPONSE — S17

PERFORM INTERFERENCE REMOVAL — S18

END

32

# FIG.5

```
        ╭─────────────────────╮
        │  START STATION'S    │
        │ COMMUNICATION PROCESS│
        ╰─────────────────────╯
                  │
                  ▼
        ┌─────────────────────┐ S51
        │ RECEIVE TRIGGER FRAME│
        └─────────────────────┘
                  │
                  ▼
        ┌─────────────────────┐ S52
        │ SPECIFY TRANSMISSION │
        │ STATION, RECEPTION   │
        │ STATION, AND SSN     │
        └─────────────────────┘
                  │
                  ▼
```

S53 IS WIRELESS COMMUNICATION DEVICE ITSELF TRANSMISSION STATION? — YES →

S59 GENERATE PREAMBLE ON BASIS OF SSN OF WIRELESS COMMUNICATION DEVICE ITSELF

S60 GENERATE TRANSMISSION SIGNAL

S61 TRANSMIT TRANSMISSION SIGNAL AT TIMING DETERMINED BY TRIGGER FRAME

NO

S54 IS WIRELESS COMMUNICATION DEVICE ITSELF RECEPTION STATION? — NO →

S58 SET NAV

YES

S55 RECEIVE SIGNAL TRANSMITTED FROM TRANSMISSION STATION

S56 REQUEST CHANNEL RESPONSE

S57 PERFORM INTERFERENCE REMOVAL

END

# FIG.6

FD COMMUNICATION STATION

FDP11

TXP11

TRANSMISSION STATION

RXP11

RECEPTION STATION

# FIG.7

EP 3 678 300 A1

# FIG.8

# FIG.9

```
START FD COMMUNICATION STATION'S
COMMUNICATION PROCESS
```

SELECT TRANSMISSION STATION AND RECEPTION STATION — S101

DETERMINE SSN OF TRANSMISSION SIGNAL — S102

GENERATE TRIGGER FRAME — S103

TRANSMIT TRIGGER FRAME — S104

GENERATE PREAMBLE ON BASIS OF SSN
OF FD COMMUNICATION STATION ITSELF — S105

GENERATE TRANSMISSION SIGNAL — S106

TRANSMIT TRANSMISSION SIGNAL AT
TIMING DETERMINED BY TRIGGER FRAME — S107

RECEIVE SIGNAL TRANSMITTED BY TRANSMISSION STATION — S108

END

# F I G . 1 0

```
          ┌─────────────────────────────────────┐
          │     START TRANSMISSION STATION'S     │
          │        COMMUNICATION PROCESS         │
          └─────────────────────────────────────┘
                           │
                           ▼
   ┌───────────────────────────────────────────────┐  S131
   │             RECEIVE TRIGGER FRAME             │
   └───────────────────────────────────────────────┘
                           │
                           ▼
   ┌───────────────────────────────────────────────┐  S132
   │ SPECIFY TRANSMISSION STATION, RECEPTION STATION, AND SSN │
   └───────────────────────────────────────────────┘
                           │
                           ▼
   ┌───────────────────────────────────────────────┐  S133
   │        GENERATE PREAMBLE ON BASIS OF SSN OF    │
   │        WIRELESS COMMUNICATION DEVICE ITSELF    │
   └───────────────────────────────────────────────┘
                           │
                           ▼
   ┌───────────────────────────────────────────────┐  S134
   │           GENERATE TRANSMISSION SIGNAL         │
   └───────────────────────────────────────────────┘
                           │
                           ▼
   ┌───────────────────────────────────────────────┐  S135
   │          TRANSMIT TRANSMISSION SIGNAL AT       │
   │       TIMING DETERMINED BY TRIGGER FRAME       │
   └───────────────────────────────────────────────┘
                           │
                           ▼
                      ┌─────────┐
                      │   END   │
                      └─────────┘
```

# FIG.11

```
START RECEPTION STATION'S COMMUNICATION PROCESS
```

RECEIVE TRIGGER FRAME — S161

SPECIFY TRANSMISSION STATION, RECEPTION STATION, AND SSN — S162

RECEIVE SIGNALS TRANSMITTED BY TRANSMISSION STATION AND FD COMMUNICATION STATION — S163

REQUEST CHANNEL RESPONSE — S164

PERFORM INTERFERENCE REMOVAL — S165

END

# FIG.12

EP 3 678 300 A1

# FIG.13

# FIG.14

- 501 CPU
- 502 ROM
- 503 RAM
- 504 (bus)
- 505 INPUT/OUTPUT INTERFACE
- 506 INPUT SECTION
- 507 OUTPUT SECTION
- 508 RECORDING SECTION
- 509 COMMUNICATION SECTION
- 510 DRIVE
- 511 REMOVABLE RECORDING MEDIUM

EP 3 678 300 A1

## INTERNATIONAL SEARCH REPORT

| | International application No. |
|---|---|
| | PCT/JP2018/030252 |

**A. CLASSIFICATION OF SUBJECT MATTER**
Int.Cl. H04B7/0426(2017.01)i, H04B7/0413(2017.01)i, H04L27/26(2006.01)i,
      H04W88/02(2009.01)i

According to International Patent Classification (IPC) or to both national classification and IPC

**B. FIELDS SEARCHED**

Minimum documentation searched (classification system followed by classification symbols)
Int.Cl. H04B7/0426, H04B7/0413, H04L27/26, H04W88/02

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2014-519738 A (QUALCOMM INCORPORATED) 14 August 2014, paragraphs [0013]-[0062], fig. 1-7 & WO 2012/158181 A1 paragraphs [0021]-[0069], fig. 1-7 & US 2012/0294395 A1 & EP 2710770 A1 & CN 103548309 A & KR 10-2014-0014286 A | 1-4, 9-10<br>5-8 |
| X<br>Y | JP 2017-55398 A (TOSHIBA CORP.) 16 March 2017, paragraphs [0013]-[0135], fig. 1-11 & US 2017/0070267 A1 paragraphs [0039]-[0161], fig. 1-11 | 11-20<br>5-8 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 November 2018 (12.11.2018) | 20 November 2018 (20.11.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/030252 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2013-509795 A (ELECTRONICS AND TELECOMMUNICATIONS RESEARCH INSTITUTE) 14 March 2013, paragraphs [0069]-[0074], fig. 7, 8 & US 2012/0263158 A1 paragraphs [0073]-[0077], fig. 7, 8 & WO 2011/053070 A2 & EP 2496010 A2 & KR 10-2011-0047946 A & CN 102714815 A | 1-10 |
| A | CHU, Liwen (Marvell), SS Allocation in Trigger Frame, IEEE 802. 11-16/0644r0, IEEE, Internet<URL:https://mentor.ieee.org/802.11/dcn/16/11-16-0644-00-00ax-ss-allocation-in-trigger.pptx>, 16 May 2016 | 11-20 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160344532